# EUROPEAN PATENT SPECIFICATION

(11) **EP 2 453 384 B1**
(45) Date of publication and mention of the grant of the patent: **29.07.2015**
(21) Application number: 11008231.0
(22) Date of filing: 12.10.2011
(51) Int. Cl.: A63F 13/00

(54) **Method and apparatus for performing gesture recognition using object in multimedia device**
Verfahren und Vorrichtung zur Durchführung der Gestenerkennung unter Verwendung eines Objekts in einer Multimediavorrichtung
Procédé et appareil pour effectuer une reconnaissance de gestes à l'aide d'un objet dans un dispositif multimédia

(30) Priority: 12.11.2010 KR 20100112528
(43) Date of publication of application: 16.05.2012
(73) Proprietor: LG ELECTRONICS INC., Yeongdeungpo-gu Seoul 150-721 (KR)
(72) Inventor: Im, Soungmin, Pyeongtaek-si Gyeonggi-do 451-731 (KR); Park, Soungsoo, Pyeongtaek-si Gyeonggi-do 451-731 (KR); Kang, Mingoo, Pyeongtaek-si Gyeonggi-do 451-731 (KR)
(74) Representative: Beyer, Andreas

(56) References cited:
- GB-A- 2 425 910
- US-A1- 2009 158 220
- US-A1- 2010 208 038
- US-A1- 2010 281 437
- Richard Leadbetter: "Kinect tech spec finally revealed", , 30 June 2010 (2010-06-30), XP002664940, Retrieved from the Internet: URL:http://www.eurogamer.net/articles/digi talfoundry-kinect-spec-blog-entry [retrieved on 2011-12-01]
- "Kinect", Wikipedia webpage , pages 1-18, XP002664941, Retrieved from the Internet: URL:http://en.wikipedia.org/wiki/Kinect [retrieved on 2011-12-01]

## Description

This application claims the benefit of Korean Patent Application No. 10-2010-0112528, filed on November 12, 2010.

### BACKGROUND OF THE INVENTION

### Field of the Invention

The present invention relates to a multimedia device and a method for operating the same, and more particularly to a multimedia device for increasing user convenience and a method for operating the same.

Particularly, the present invention relates to a multimedia device capable of easily performing gesture recognition using a variety of objects as a gesture input unit to carry out a function of the multimedia device, and a method for operating the same.

### Discussion of the Related Art

A multimedia device includes a function for receiving and processing a viewable image for a user. The user can view a broadcast using the multimedia device. For example, the multimedia device displays a broadcast, which is selected by the user from broadcast signals transmitted from a broadcast station, on a display. Currently, analog broadcasting is being phased out in favor of digital broadcasting.

A digital broadcast refers to a broadcast for transmitting digital video and audio signals. The digital broadcast has low data loss due to robustness against external noise, advantageous error correction, and high-resolution transmission capabilities, as compared with an analog broadcast. In addition, the digital broadcast can provide a bidirectional service unlike an analog broadcast.

In addition, in order to use the above digital broadcasting, recent multimedia devices have higher performance and a larger number of functions as compared to legacy multimedia devices. In addition, services available in the multimedia device, for example, Internet service, Video On Demand (VOD), network game service, etc., are being diversified.

US2009/158220 discloses a system for three-dimensional object mapping comprising a user entering an object recognition mode and presenting an object to the system, and the system scanning the object to recognize the shape of the object, storing the object information, and allowing the user to define actions performed by the system to be correlated with the object, such that, when the user later presents the object to the system, the correlated actions are performed. A plurality of objects may be registered with the system, and each of the objects is associated with a different correlated action.

Richard Leadbetter: "Kinnect tech spec finally revealed", 30 June 2010 discloses the use of a VGA depth sensor having a revolution of 320x240.

US 2010/281437 discloses a system for recognizing a motion of a user using depth recognition cameras. A user's body and/or an object held by a user may be tracked.

Although the above-mentioned various functions and services are used in the multimedia device, such functions and services commonly require that a user perform complex input operations. However, due to input operations, it is generally difficult for the user to execute the above-mentioned functions or services using a conventional multimedia device remote controller. Due to the above-mentioned problems, the conventional multimedia device has to force a user to purchase an additional user controller.

Therefore, in order to solve the above-mentioned problems of the conventional multimedia device, it is necessary to develop a gesture recognition method and an improved multimedia device thereof, wherein the gesture recognition method allows a user to perform various functions and services, in the multimedia device using peripheral objects.

### SUMMARY OF THE INVENTION

Accordingly, the present invention is directed to a method and multimedia device for performing gesture recognition using objects in a multimedia device according to the pending independent claims. The method and multimedia device substantially obviate one or more problems due to limitations and disadvantages of the related art.

An object of the present invention is to provide a multimedia device for increasing user convenience, and a method for operating the same.

Another object of the present invention is to provide a multimedia device capable of providing a variety of user interface (UI) input units, and a method for operating the same.

It will be appreciated by persons skilled in the art that the objects that can be achieved by the present invention are not limited to what has been particularly described hereinabove and the above and other objects that the present invention can achieve will be more clearly understood from the following detailed description taken in conjunction with the accompanying drawings.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a gesture recognition method for use in a multimedia device includes capturing a peripheral image of the multimedia device by operating an image sensing unit, recognizing an object contained in the captured image, in relation to a gesture made by the recognized object, mapping a multimedia device operation to the gesture, and establishing an input standby mode of the gesture.

In another aspect of the present invention, a gesture recognition method for use in a multimedia device includes capturing a peripheral image of the multimedia device by operating an image sensing unit, recognizing an object contained in the captured image, executing an application corresponding to the recognized object, in relation to a gesture made by the recognized object, mapping a multimedia device operation to the gesture, and establishing an input standby mode of the gesture.

In another aspect of the present invention, a multimedia device for recognizing a user gesture, the multimedia device includes an image sensing unit for capturing a peripheral image of the multimedia device, an image recognition unit for analyzing the image captured by the image sensing unit and recognizing an object contained in the captured image, a storage unit for storing mapping data between a user gesture made by an object and a multimedia device operation, and a controller that searches for the mapping data of the object recognized by the image recognition unit in the storage unit, loads the mapping data, and thus establishes a gesture input standby mode.

In another aspect of the present invention, a multimedia device for recognizing a user gesture includes an image sensing unit for capturing a peripheral image of the multimedia device, an image recognition unit for analyzing the image captured by the image sensing unit and recognizing an object contained in the captured image, an application execution unit for searching and executing an application corresponding to the recognized object, a storage unit for storing mapping data between a user gesture made by an object and an application operation, and a controller that loads the mapping data corresponding to the executed application from the storage unit, and establishes an input standby mode of the gesture related to the executed application operation.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
- FIG. 1: is a block diagram illustrating an example of an overall system including a multimedia device according to one embodiment of the present invention.
- FIG. 2: is a detailed block diagram illustrating the multimedia device shown in FIG. 1.
- FIG. 3: simultaneously shows a multimedia device that uses a plurality of heterogeneous image sensors and a plurality of captured screen images according to one embodiment of the present invention.
- FIG. 4: is a conceptual diagram illustrating a method for utilizing detection data and recognition data using several heterogeneous image sensors and a multimedia device according to one embodiment of the present invention.
- FIG. 5: exemplarily shows face vectors stored in a database (DB) shown in FIG. 4.
- FIG. 6: is a block diagram illustrating a hardware region and a software region orchestrating the operations of several heterogeneous image sensors FIG. 7 connected to a multimedia device according to one embodiment of the present invention. is a block diagram illustrating several heterogeneous image sensors and a multimedia device according to one embodiment of the present invention.
- FIG. 8: is a block diagram illustrating several heterogeneous image sensors and a multimedia device according to another embodiment of the present invention.
- FIG. 9: is a detailed block diagram illustrating several heterogeneous image sensors according to one embodiment of the present invention.
- FIG. 10: is a conceptual diagram illustrating one example of a first image sensor among several heterogeneous image sensors according to one embodiment of the present invention.
- FIG. 11: is a conceptual diagram illustrating another example of a first image sensor among several image sensors according to one embodiment of the present invention.
- FIG. 12: is a conceptual diagram illustrating a method for calculating a distance using the first image sensor shown in FIG. 11.
- FIG. 13: is a detailed block diagram illustrating an example of the multimedia device shown in FIG. 1 or 2.
- FIG. 14: is a conceptual diagram illustrating a method for recognizing a gesture using an object in a multimedia device according to one embodiment of the present invention.
- FIG. 15: is a conceptual diagram illustrating a method for recognizing a peripheral object in a multimedia device according to one embodiment of the present invention.
- FIG. 16: is a conceptual diagram illustrating a method for manipulating a multimedia device using an object according to one embodiment of the present invention.
- FIG. 17: is a conceptual diagram illustrating a method for utilizing an application of a multimedia device using an object according to one embodiment of the present invention.
- FIG. 18: is a flowchart illustrating a method for operating a multimedia device using an object according to one embodiment of the present invention.
- FIG. 19: is a flowchart illustrating a method for utilizing an application of a multimedia device using an object according to one embodiment of the present invention.
- FIG. 20: shows a display image including an object recognition notification message according to one embodiment of the present invention.
- FIG. 21: shows a display image for selecting an object to be established as an input unit according to one embodiment of the present invention.
- FIG. 22: shows a display image including an input unit setup menu according to one embodiment of the present invention.
- FIG. 23: shows a display image including information about a method for manipulating an object to be established as an input unit according to one embodiment of the present invention.
- FIG. 24: shows a display image including detailed manipulation information of an object established as an input unit according to one embodiment of the present invention.
- FIG. 25: shows a display image including a list of user gestures according to one embodiment of the present invention.
- FIG. 26: shows a display image including an input unit setup notification message according to one embodiment of the present invention.
- FIG. 27: shows a display image including the list of applications corresponding to an object established as an input unit according to one embodiment of the present invention.
- FIG. 28: shows a display image that uses an application using an object established as an input unit according to one embodiment of the present invention.
- FIG. 29: is a database (DB) for storing data of an object corresponding to an application according to one embodiment of the present invention.

### DESCRIPTION OF SPECIFIC EMBODIMENTS

Reference will now be made in detail to the preferred embodiments of the present invention, examples of which are illustrated in the accompanying drawings. Wherever possible, the same reference numbers will be used throughout the drawings to refer to the same or like parts. In the following description, a suffix "module" or "unit" appended to terms of constituent elements to be described will be selected or used together in consideration only of the convenience of writing the following specification, and the suffixes "module" and "unit" have any specific meaning or serve any specific purpose.

Meanwhile, the multimedia device to be described in the following specification may correspond to, for example, various types of devices for receiving and processing broadcast data. Further, the multimedia device may be a connected television (TV). The connected TV may further include a broadcast reception function, a wired/wireless communication device, etc., such that it may have user-friendly interfaces such as a handwriting input device, a touch screen, or a remote controller for motion recognition. Further, because the multimedia device supports wired or wireless Internet, it is capable of e-mail transmission/reception, Web browsing, banking, gaming, etc. by connecting to the Internet or a computer. To implement these functions, the multimedia device may operate based on a standard general-purpose Operating System (OS).

Various applications can be freely added to or deleted from, for example, a general-purpose OS kernel in the connected TV according to the present invention. Therefore, the multimedia device may perform a number of user-friendly functions. The connected TV may be a Web TV, an Internet TV, a Hybrid Broad Band TV (HBBTV), a smart TV, a DTV, or the like, for example. The multimedia device is applicable to a smart phone, as needed.

Embodiments of the present invention will be described in detail with reference to the attached drawings, but it should be understood that these embodiments are merely illustrative of the present invention and should not be interpreted as limiting the scope of the present invention.

In addition, although the terms used in the present invention are selected from generally known and used terms, some of the terms mentioned in the description of the present invention, the detailed meanings of which are described in relevant parts of the description herein, have been selected by the applicant at his or her discretion. Furthermore, the present invention must be understood, not simply by the actual terms used but by the meanings of each term lying within.

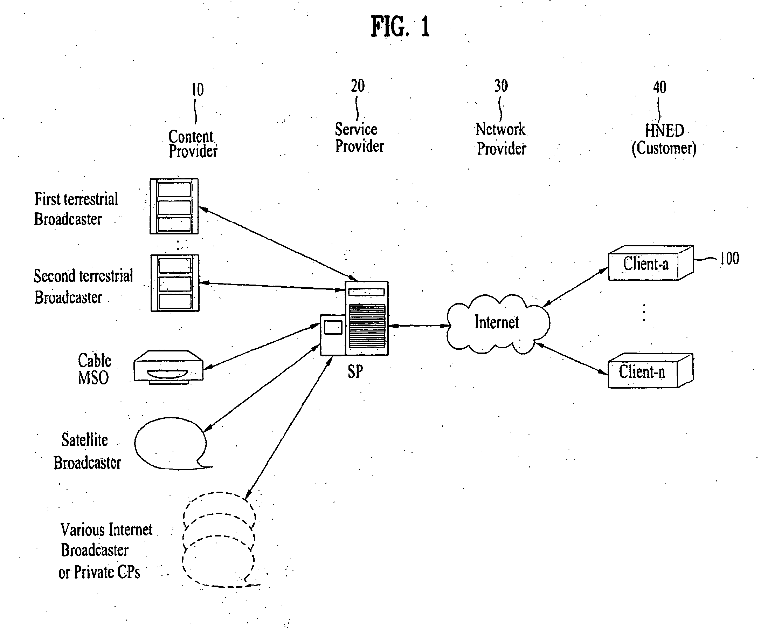

FIG. 1 is a block diagram illustrating an example of an overall system including a multimedia device according to one embodiment of the present invention.

Although the multimedia device of FIG. 1 may correspond to the connected TV as an example, the scope or spirit of the present invention is not limited thereto and can be applied to other examples as necessary. Other additions, subtractions, or modifications are obvious in view of the present disclosure and are intended to fall within the scope of the appended claims.

Referring to FIG. 1, the broadcast system may include a Content Provider 10, a Service Provider 20, a Network Provider 30, and a Home Network End Device (HNED) 40. The HNED 40 corresponds to, for example, a client 100 which is a multimedia device according to an embodiment of the present invention.

The content provider 10 creates and provides content. The content provider 10 may be, for example, a terrestrial broadcaster, a cable System Operator (SO) or Multiple System Operator (MSO), a satellite broadcaster, or an Internet broadcaster, as illustrated in FIG. 1. Besides broadcast content, the content provider 10 may provide various applications, which will be described later in detail.

The service provider 20 may provide content received from the content provider 10 in a service package. For instance, the service provider 20 may package first terrestrial broadcasts, second terrestrial broadcasts, cable MSO, satellite broadcasts, various Internet broadcasts, and applications and provide the packaged broadcasts to users.

The network provider 30 may provide a network over which a service is provided to the client 100. The client 100 may construct a home network and receive a service over the home network.

Meanwhile, the client 100 may also transmit content over a network. In this case, the client 100 serves as a content provider and thus the content provider 10 may receive content from the client 100. Therefore, an interactive content service or data service can be provided.

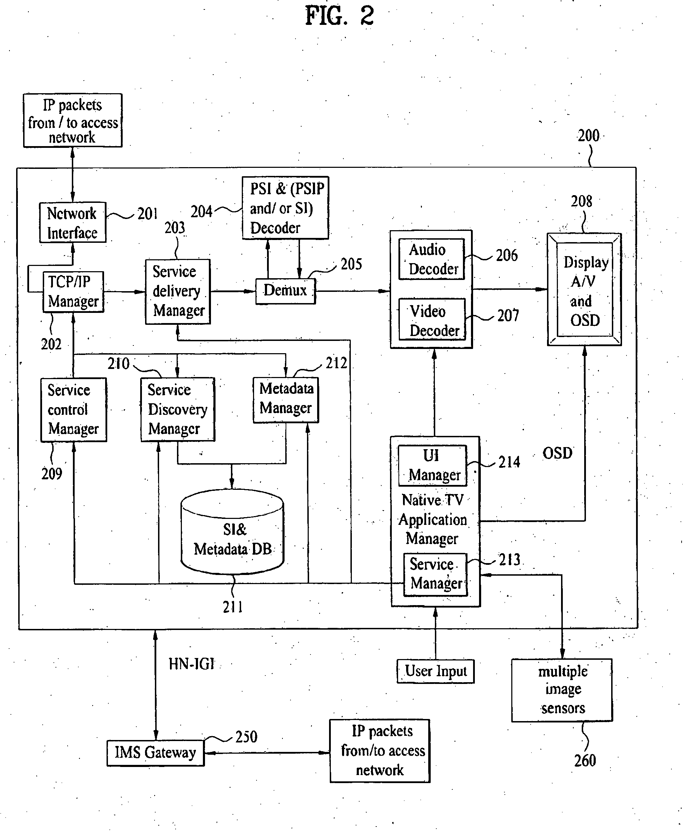

FIG. 2 is a detailed block diagram illustrating the multimedia device shown in FIG. 1.

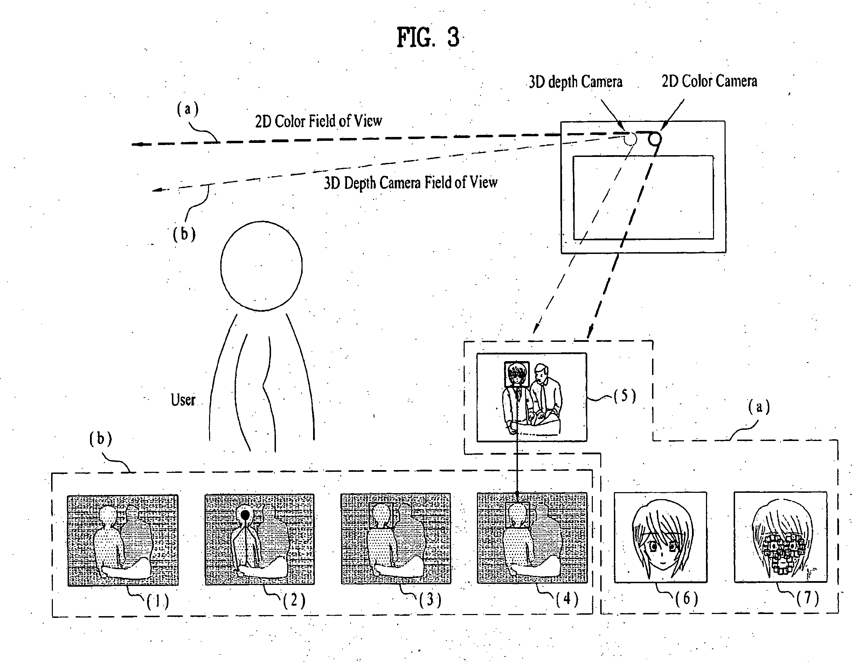

Referring to FIG. 3, the multimedia device 200 includes a network interface 201, a Transmission Control Protocol/Internet Protocol (TCP/IP) manager 202, a service delivery manager 203, a demultiplexer (DEMUX) 205, a Program Specific Information (PSI) & (Program and System Information Protocol (PSIP) and/or SI) decoder 204, an audio decoder 206, a video decoder 207, a display A/V and On Screen Display (OSD) module 208, a service control manager 209, a service discovery manager 210, a metadata manager 212, an SI & metadata database (DB) 211, a User Interface (UI) manager 214, a service manager 213, etc. Furthermore, several heterogeneous image sensors 260 are connected to the multimedia device 200. For example, the heterogeneous image sensors 260 may be connected to the multimedia device 200 through a Universal Serial Bus (USB). Although the heterogeneous image sensors 260 are configured in the form of a separate module, the heterogeneous image sensors 260 may be embedded in the multimedia device 200 as necessary.

The network interface 21 transmits packets to and receives packets from a network. That is, the network interface 201 receives services and content from a service provider over the network.

The TCP/IP manager 202 is involved in packet reception and transmission of the multimedia device 200, that is, packet delivery from a source to a destination.

The service delivery manager 203 controls received service data. For example, when controlling real-time streaming data, the service delivery manager 203 may use the Real-time Transport Protocol/Real-time Transport Control Protocol (RTP/RTCP). If real-time streaming data is transmitted over RTP, the service delivery manager 203 parses the received real-time streaming data using RTP and outputs the parsed real-time streaming data to the demultiplexer (DEMUX) 205 or stores the parsed real-time streaming data in the SI & metadata DB 211 under the control of the service manager 213. In addition, the service delivery manager 203 feeds back network reception information to a server that provides the real-time streaming data service using RTCP.

The demultiplexer (DEMUX) 205 demultiplexes a received packet into audio data, video data and PSI data and outputs the audio data, video data and PSI data to the audio decoder 206, the video decoder 207, and the PSI & (PSIP and/or SI) decoder 204, respectively.

The PSI & (PSIP and/or SI) decoder 204 decodes SI such as PSI. More specifically, the PSI & (PSIP and/or SI) decoder 704 decodes PSI sections, PSIP sections or Service Information (SI) sections received from the demultiplexer (DEMUX) 205.

The PSI & (PSIP and/or SI) decoder 204 constructs a Service Information (SI) DB by decoding the received sections and stores the SI DB in the SI & metadata DB 211.

The audio decoder 206 and the video decoder 207 decode the audio data and the video data received from the demultiplexer (DEMUX) 205 and output the decoded audio and video data to a user.

The UI manager 214 provides a Graphical User Interface (GUI) in the form of an On Screen Display (OSD) and performs a reception operation corresponding to a key input received from the user. For example, upon receipt of a key input signal from the user regarding channel selection, the UI manager 214 transmits the key input signal to the service manager 213.

The service manager 213 controls managers associated with services, such as the service delivery manager 203, the service discovery manager 210, the service control manager 209, and the metadata manager 212.

The service manager 213 also makes a channel map and selects a channel using the channel map according to the key input signal received from the UI manager 214. The service discovery manager 210 provides information necessary to select an SP that provides a service. Upon receipt of a channel selection signal from the service manager 213, the service discovery manager 210 detects a service based on the channel selection signal.

The service control manager 309 takes charge of selecting and controlling services. For example, if a user selects live broadcasting, like a conventional broadcasting service, the service control manager selects and controls the service using Internet Group Management Protocol (IGMP) or Real-Time Streaming Protocol (RTSP). If the user selects Video on Demand (VoD), the service control manager 209 selects and controls the service. The metadata manager 212 manages metadata related to services and stores the metadata in the SI & metadata DB 211.

The SI & metadata DB 211 stores the service information (SI) decoded by the PSI & (PSIP and/or SI) decoder 204, the metadata managed by the metadata manager 212, and the information required to select a service provider, received from the service discovery manager 210. The SI & metadata DB 211 may store setup data for the system.

An IMS gateway (IG) 205 is equipped with functions needed to access IMS-based IPTV services.

Several heterogeneous image sensors 260 shown in FIG. 2 are configured to capture one or more images of a person or object around the multimedia device 200. More specifically, for example, the heterogeneous image sensors 260 are designed to operate successively or periodically, and are also designed to operate at a selected time or at a specific condition. Detailed description thereof will be given in the following description.

FIG. 3 simultaneously shows a multimedia device that uses a plurality of heterogeneous image sensors and a plurality of captured screen images according to one embodiment of the present invention. A multimedia device that uses a plurality of heterogeneous image sensors and a plurality of captured images according to one embodiment of the present invention will hereinafter be described with reference to FIG. 3.

Generally, first image sensors related to the processing of depth data are not suitable for recognizing a face located at a remote site due to the limited resolution (e.g., maximum VGA level) and the limited recognition distance (e.g., 3.5m). Second image sensors related to the processing of color data have a slow recognition speed, and are vulnerable to variations in lighting. Therefore, in order to solve the above shortcomings of the image sensors, the multimedia device according to one embodiment of the present invention is configured to interoperate with a hybrid-type image sensor module in which a first image sensor and a second image sensor are combined.

For example, an IR camera or a depth camera may be used as the first image sensor. In more detail, for example, the Time Of Flight (TOF) scheme and the structured light scheme are being discussed for the IR camera or the depth camera. The TOF scheme calculates distance information using a time difference between an infrared emission time and reception of reflected IR light. The structured light scheme emits infrared rays, analyzes a modified pattern, and calculates a distance according to the result of the analysis. However, the first image sensor has advantages over the recognition of depth data and the processing speed of depth data, and can easily detect an object, a person, etc. even under low light conditions. However, the first image sensor has a disadvantage in that it has poor resolution at a remote site.

Further, for example, the color camera or the RGB camera is used as a second image sensor. In more detail, for example, the stereo camera scheme or the mono camera scheme is being intensively discussed as the color or RGB camera. The stereo camera scheme detects and tracks hands, a face, etc. on the basis of time difference comparison information between individual images captured by two cameras. The mono camera scheme detects hands, a face, etc. on the basis of shape and color information captured by one camera. The second image sensor has an advantage in that it has higher resolution than the first image sensor, is vulnerable to peripheral illumination as compared to the first image sensor, and has poor low light recognition performance. Specifically, the second image sensor has difficulty in accurately recognizing depth.

In order to solve the conventional problems, as shown in FIG. 3, the multimedia device according to one embodiment of the present invention is configured to include both the first image sensor and the second image sensor according to one embodiment of the present invention. However, the image sensors may be embedded in the multimedia device, and may be configured in the form of a separate hardware module. As shown in FIG. 3(b), the first image sensor captures an image including users present in a peripheral region of the multimedia device. Detailed captured images are sequentially shown in regions (1), (2), (3) and (4) of FIG. 3.

Meanwhile, once the first image sensor completes image capture and the first image sensor completes data analysis, the second image sensor captures a specific user face. Detailed captured images are sequentially shown in the regions (5), (6) and (7) of FIG. 3.

The first image sensor from among several heterogeneous image sensors according to one embodiment of the present invention captures a first image of a peripheral region of the multimedia device, and extracts depth data from the captured first image. As shown in the region (1) of FIG. 3, regions of individual objects may be displayed at different brightness levels according to a distance.

Further, the first image sensor can recognize a face of at least one user using the extracted depth data. That is, as shown in the region (2) of FIG. 3, the first image sensor extracts user's body information (e.g., a face, hands, feet, a joint, etc.) using information stored in a preset database (DB). Then, as shown in the region (3) of FIG. 3, the first image sensor acquires position coordinates of a specific user's face and distance information thereof. In more detail, the first image sensor is designed to calculate x, y and z values indicating position information of the user's face, where x is a horizontal position of the user's face in the captured first image, y is a vertical position of the user's face in the captured first image, and z is a distance between the user's face and the first image sensor.

The second image sensor for extracting a color image (i.e., RGB image) from among several heterogeneous image sensors according to one embodiment of the present invention captures the recognized user's face to output a second image as denoted by the region (5) of FIG. 3.

On the other hand, if the first image sensor and the second image sensor as shown in FIG. 3 are adjacent to each other, an error caused by a difference in physical position may be ignored as necessary. In accordance with still another embodiment of the present invention, the coordinate information or distance information acquired from the first image sensor is corrected using the physical position difference information, and the second image sensor can capture images of a user using the corrected coordinate information or the corrected distance information. If it is assumed that the first image sensor and the second image sensor are located parallel to the ground, information about the aforementioned physical position difference may be established on the basis of a horizontal frame. The second image sensor extracts characteristic information from the captured second image as shown in the region (7) of FIG. 3. The characteristic information is data corresponding to a specific part (e.g., a mouth, a nose, eyes, etc.) for identifying a plurality of users who use the multimedia device. Further, the second image sensor may zoom in on the user's face on the basis of coordinate values (i.e., x, y, and z values) acquired from the image captured by the first image sensor. The above-mentioned operation indicates transition from the region (5) to the other region (6) in FIG. 3.

If image capturing of the first image sensor and the second image sensor and data analysis thereof have been completed, the multimedia device according to one embodiment of the present invention gains access to a memory that stores data corresponding to the extracted characteristic information, and extracts information for identifying a specific user stored in the memory.

If the information for identifying the specific user is present in the memory, the multimedia device provides a predetermined service to the specific user.

On the other hand, if the information for identifying the specific user is not present in the memory, the multimedia device is configured to display a notification asking the user if the recognized user should be stored in the memory.

As described above, in accordance with one embodiment of the present invention, the first image sensor is configured to detect position information of a user and coordinate information of the user's face, and the second image sensor is configured to recognize the user's face using data acquired from the first image sensor.

In accordance with still another embodiment of the present invention, the second image sensor is conditionally operated, i.e. is configured to operate only in specific circumstances. For example, if information of a distance to the user (hereinafter referred to as user distance information) acquired by the operation of the first image sensor is identical to or less than a first reference value, or if a recognition rate of the user's face acquired by the operation of the first image sensor is higher than the second reference value, a face image of the user who is present in a peripheral region of the multimedia device is detected and recognized using the first image sensor only. On the other hand, if the user distance information acquired by the operation of the first image sensor is higher than the first reference value, or if a recognition rate of the user's face acquired by the operation of the first image sensor is less than the second reference value, the second image sensor is additionally used so that the user's face can be recognized.

In accordance with still another embodiment of the present invention, when the second image sensor recognizes the user's face, the multimedia device zooms in on the recognized user's face image using the distance information acquired by the first image sensor, and captures only the user's face using facial coordinate information acquired by the first image sensor.

Therefore, when using different types of heterogeneous image sensors, the multimedia device can recognize the user's face at a remote site and has a higher data processing speed as compared to the conventional art.

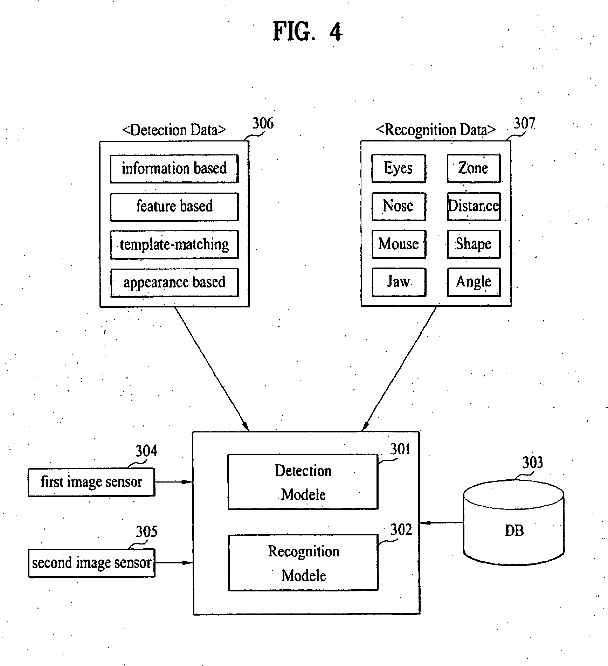

FIG. 4 is a conceptual diagram illustrating a method for utilizing detection data and recognition data using several heterogeneous image sensors and a multimedia device according to one embodiment of the present invention.

A face detection process is different from a face recognition process. The face detection process includes a process for detecting a facial region contained in one image. In contrast, the face recognition process can recognize which user corresponds to the detected face image. Specifically, a method for performing the face detection process using the first image sensor and performing the face recognition process using the second image sensor according to one embodiment of the present invention will hereinafter be described with reference to FIG. 4.

Referring to FIG. 4, the multimedia device according to one embodiment of the present invention includes a detection module 301, a recognition module 302, a database (DB) 303, a first image sensor 304, a second image sensor 305, etc, and may use detection data 306 and recognition data 307 as necessary. For example, the detection data 306 may be generated on the basis of knowledge-based detection techniques, feature-based detection techniques, template matching techniques, and appearance-based detection techniques. In addition, the recognition data 307 may include, for example, data of eyes, nose, jaw, area, distance, shape, angle, etc.

Further, the detection module 301 determines the presence or absence of a user's face using image data received from the first image sensor 304. In a process for estimating a region in which a user's face is present, data of knowledge-based detection techniques, feature-based detection techniques, template matching techniques, and appearance-based detection techniques is used.

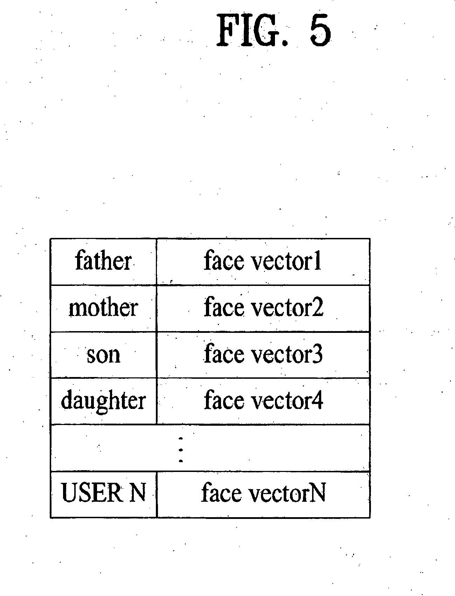

The recognition module 302 identifies whether or not an objective user is a specific user using image data received from the second image sensor 305. In this case, the recognition module 302 compares the received image data with face vector information stored in the DB 303 on the basis of the above-mentioned recognition data 307, and a detailed description thereof will hereinafter be described with reference to FIG. 5.

FIG. 5 exemplarily shows face vectors stored in a database (DB) shown in FIG. 4.

Referring to FIG. 5, the DB stores a plurality of face vectors of individual users who use the multimedia device according to one embodiment of the present invention. The face vector is a set of data units of characteristic information that appears on faces of users, and is used to identify each characteristic user.

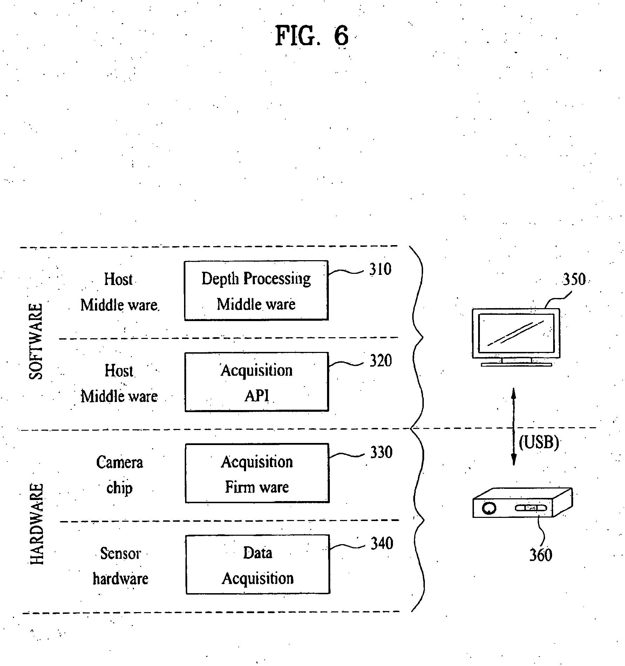

FIG. 6 is a block diagram illustrating a hardware region and a software region including the operations of several heterogeneous image sensors connected to a multimedia device according to one embodiment of the present invention.

Referring to FIG. 6, the multimedia device operates upon receiving images from a plurality of heterogeneous image sensors. The operations shown in FIG. 6 may be classified into operations belonging to the hardware region 360 of the image sensor and other operations belonging to the software region 350 of the multimedia device processing data received from the image sensor, and detailed description thereof will be given below.

In FIG. 6, although the hardware region 360 is configured as a separate module, it may also be embedded in a multimedia device for processing the software region 350 as necessary.

First, the hardware region 360 may include a data acquisition region 340 and a firmware region 330.

The data acquisition region 340 receives original data to be recognized by the multimedia device through an image sensor, and may include an IR light projector, a depth image sensor, an RGB image sensor, a microphone, and a camera chip.

In addition, the firmware region 330 is present in the hardware region 360 and is configured to interconnect the hardware region and the software region. In addition, the firmware region 330 may be configured as a host application required for a specific application, and may perform downsampling, mirroring, etc.

Therefore, the data acquisition region 340 and the firmware region 330 are interoperable with each other so as to control the hardware region 360. In addition, the firmware region 360 can be controlled through the data acquisition region 340 and the firmware region 330. The firmware region may be driven by a camera chip.

Further, the software region 350 may include an Application Programming Interface (API) region 320 and a middleware region 310.

The API region 320 may be executed by a controller of the multimedia device. In addition, if the camera unit is configured as an additional external device independent of the multimedia device. The API region may be executed in a personal computer (PC), a game console, a set-top box (STB), etc.

The API region 320 may be a simple API for allowing the multimedia device to drive sensors of the hardware region.

The middleware region 310 serving as a recognition algorithm region may include depth processing middleware.

The middleware region 310 can provide an application along with the definite user control API, even when the user inputs a gesture through his or her hand(s) or through the entire region of his or her body. In addition, the middleware region may include an algorithm that performs an operation to search for a user's hand position, an operation for tracking a user's position, an operation for extracting characteristics of the user's frame, and operation for separately recognizing a user image and a background image in the input image. In addition, the algorithm may be operated by means of depth information, color (RGB) information, infrared information, and voice information that are acquired from the hardware region.

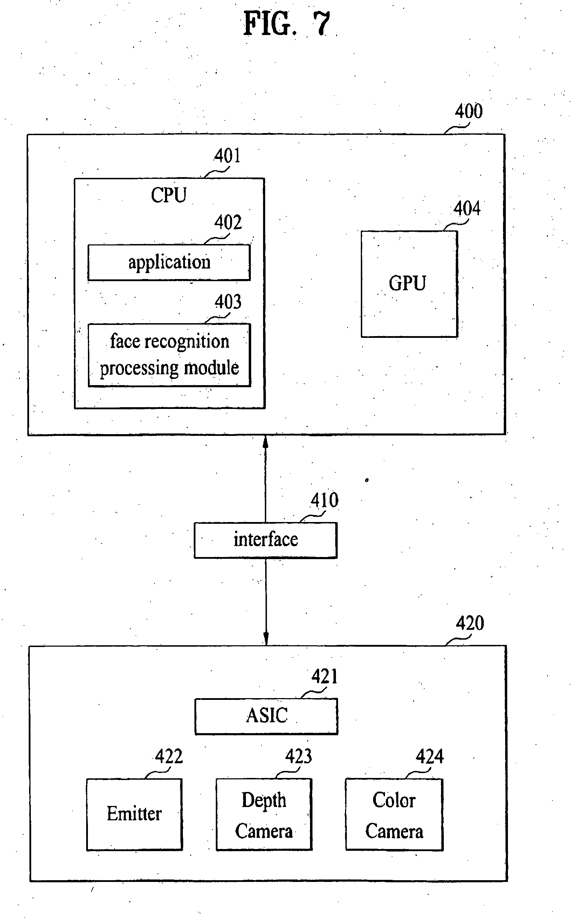

FIG. 7 is a block diagram illustrating several heterogeneous image sensors and a multimedia device according to one embodiment of the present invention. A plurality of heterogeneous image sensors and a multimedia device according to one embodiment of the present invention will hereinafter be described with reference to FIG. 7. Although the heterogeneous image sensors and the multimedia device are independent of each other in FIG. 7, a multiple camera may also be embedded in the multimedia device as necessary.

Referring to FIG. 7, the multimedia device 400 according to one embodiment of the present invention is configured to include a Central Processing Unit (CPU) module 401 and a Graphic Processing Unit (GPU) module 404, and the CPU 401 may include the application 402 and the face recognition processing module 403. Meanwhile, the heterogeneous image sensors 420 according to one embodiment of the present invention is configured to include an Application Specific Integrated Circuit (ASIC) 421, an emitter 422, a first image sensor 423, and a second image sensor 424. The multimedia device 400 and the heterogeneous image sensors 420 are interconnected via a wired or wireless interface 410. For example, the Universal Serial Bus (USB) interface may also be used. However, the above-mentioned modules shown in FIG. 7 are disclosed only for illustrative purposes, and can be applied to other examples as necessary. Other additions, subtractions, or modifications are obvious in view of the present disclosure and are intended to fall within the scope of the appended claims.

The emitter 422 emits light to one or more users located in the vicinity of the multimedia device 400. Further, the first image sensor 423 captures a first image using the emitted light, extracts depth data from the captured first image, and detects a face of at least one user using the extracted depth data. In addition, the second image sensor 424 captures a second image of the detected user's face, and extracts characteristic information from the captured second image.

In addition, the extracted characteristic information is transmitted to the face recognition processing module 403 through the interface 410. Although not shown in FIG. 7, the face recognition processing module 403 may further include, for example, a receiver, a memory, an extractor, a controller, etc.

The receiver of the face recognition processing module 403 receives characteristic information transmitted from the heterogeneous image sensors 420 and the interface 410. Further, the memory of the face recognition processing module 403 may include characteristic information of at least one user and an ID corresponding to the user.

Therefore, the extractor of the face recognition processing module 430 extracts an ID corresponding to the received characteristic information from the memory, and the controller of the face recognition processing module 403 is configured to automatically perform predetermined functions corresponding to the aforementioned ID.

On the other hand, if the operation of the face recognition processing module is performed in the CPU of the multimedia device as shown in FIG. 7, this multimedia device is advantageous in terms of extensibility, for example, a lower cost camera may be reduced, a variety of face recognition methods may be used, and addition of necessary functions may be easily achieved.

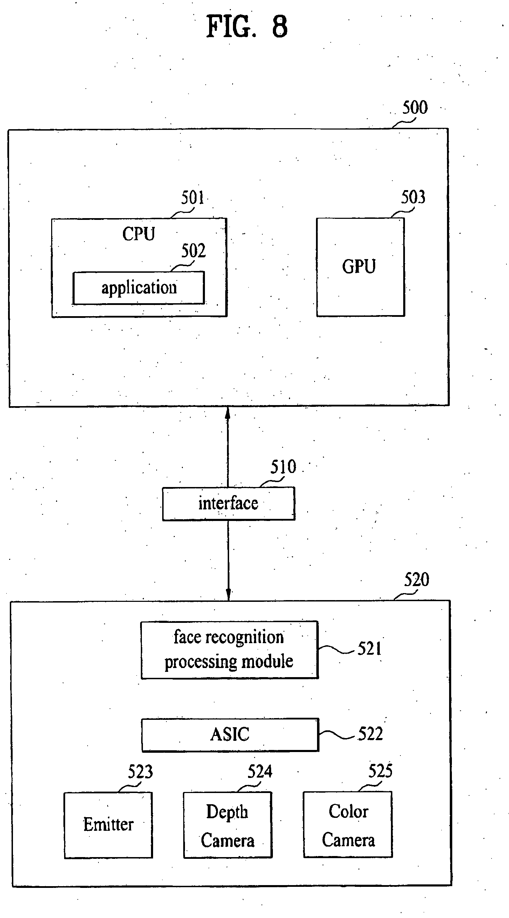

FIG. 8 is a block diagram illustrating several heterogeneous image sensors and a multimedia device according to another embodiment of the present invention. A plurality of heterogeneous image sensors and a multimedia device according to another embodiment of the present invention will hereinafter be described with reference to FIG. 8. Although the heterogeneous image sensors and the multimedia device are independent of each other in FIG. 8, a multi-camera system may also be embedded in the multimedia device as necessary.

Referring to FIG. 8, the multimedia device 500 according to another embodiment of the present invention is configured to include a CPU module 501 and a GPU module 503, and the CPU 501 may include the application 502. Meanwhile, the heterogeneous image sensors 520 according to another embodiment of the present invention ares configured to include a face recognition processing module 521, an ASIC 522, an emitter 522, a first image sensor 523, and a second image sensor 525. The multimedia device 500 and the heterogeneous image sensors 520 are interconnected via a wired or wireless interface 510. For example, the USB interface may also be used. However, the above-mentioned modules shown in FIG. 8 are disclosed only for illustrative purposes, and can be applied to other examples as necessary. Other additions, subtractions, or modifications are obvious in view of the present disclosure and are intended to fall within the scope of the appended claims.

The face recognition processing module 521 shown in FIG. 8 is mounted to each of the heterogeneous image sensors 520, differently from FIG. 7, and as such the remaining equal parts other than the face recognition processing module 521 of FIG. 8 will be omitted herein for convenience of description.

On the other hand, if the operation of the face recognition processing module is performed in the end of the heterogeneous image sensors 520 as shown in FIG. 8, it is possible to design various types of cameras through an independent platform.

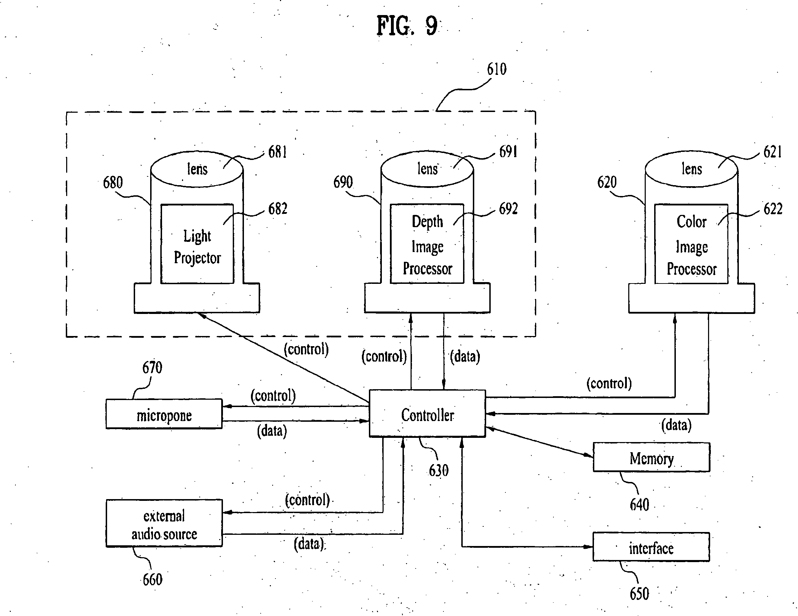

FIG. 9 is a detailed block diagram illustrating several heterogeneous image sensors according to one embodiment of the present invention. A plurality of heterogeneous image sensors according to one embodiment of the present invention will hereinafter be described with reference to FIG. 9.

Referring to FIG. 9, each of the heterogeneous image sensors according to one embodiment of the present invention includes a first image sensor group 610, a second image sensor 620, a controller 630, a memory 640, an interface 650, etc. Each heterogeneous image sensor is designed to receive audio data from a microphone 670 and an external audio source 660 upon receiving a control signal from the controller 630.

According to an embodiment, the first image sensor may be a depth image sensor.

The depth image sensor is characterized in that a pixel value recognized by an image captured through the depth image sensor indicates a distance from the depth image sensor.

The first image sensor group 610 may include an emitter 680 and a first image sensor 690. For example, the emitter may be implemented as an infrared (IR) emitter.

In order to acquire an image through the first image sensor group 610, the Time Of Flight (TOF) scheme and the structured light scheme are used. A detailed description thereof will hereinafter be given. In the TOF scheme, the emitter 680 to emit infrared light and information of a distance from a target object to a depth image sensor is calculated using a phase difference between the emitted infrared light and infrared light reflected from the target object. The structured light scheme allows the emitter 680 to emit infrared patterns (including numerous infrared points), captures an image formed when the patterns are reflected from an object using the image sensor 690 including a filter, and acquires information of a distance from the object to the depth image sensor on the basis of a distortion pattern of the above patterns.

That is, the multimedia device can recognize information of a distance to the object through the depth image sensor. Specifically, if the object is a person, the multimedia device may acquire physical information of the person and coordinate information of each physical part of the person, search for the movement of each physical part, and thus acquire detailed operation information of the physical part of the person.

Furthermore, upon receiving a control signal from the controller 630, the light projector 682 of the emitter 680 projects light on the lens 681, so as to project light on to one or more users present in a peripheral region of the multimedia device.

In addition, under the control of the controller 630, the first image sensor 690 captures a first image using light received through the lens 691, extracts depth data from the captured first image, and transmits the extracted depth data to the controller 630.

According to an embodiment, the second image sensor 620 may be an RGB image sensor. The RGB image sensor is an image sensor for acquiring color information denoted by a pixel value.

The second image sensor 620 may include three image sensors (CMOS parts) to acquire information of R (Red), G (Green) and B (Blue).

In addition, the second image sensor 620 may acquire a relatively-high resolution image as compared to the depth image sensor.

The second image sensor 620 captures a second image of a target object through the lens 621 upon receiving a control signal from the controller 630. Further, the second image sensor 620 may transmit characteristic information extracted from the captured second image to the controller 620.

The controller 630 controls the operations of the above-mentioned modules. In other words, upon receiving a capture start signal through an image sensing unit, the controller 630 captures a target object through the first image sensor group 610 and the second image sensor 620, analyzes the captured image, loads setup information from the memory 640, and thus controls the first image sensor group 610 and the second image sensor 620.

In addition, the controller 630 is designed to transmit the extracted characteristic information to the multimedia device using the interface 650. Therefore, the multimedia device having received the characteristic information can acquire characteristic information depending on the captured image.

The memory 640 may store set values of the first image sensor group 610 and the second image sensor 620. That is, if a user enters a signal for capturing a target object using the image sensing unit, the image sensing unit analyzes the entered image using the controller 630, and loads an image sensor set value depending on the analyzed result from the memory 640, such that the capturing environments of the first image sensor group 610 and the second image sensor 620 can be established.

The memory 640 may be composed of flash memory by way of example. The interface 659 may be implemented as a USB interface for connection to the external multimedia device.

Through the above-mentioned configuration, the user can enter video and audio signals to the multimedia device, and can control the multimedia device through the entered video and audio signals.

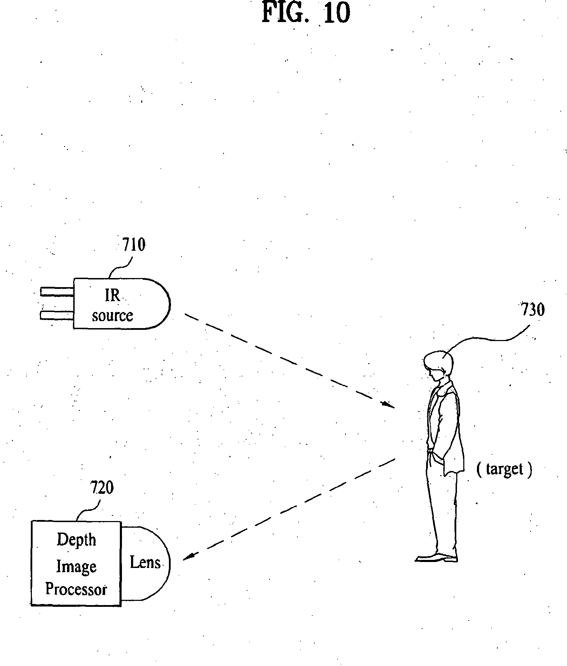

FIG. 10 is a conceptual diagram illustrating one example of a first image sensor among several heterogeneous image sensors according to one embodiment of the present invention. One example of a first image sensor from among several heterogeneous image sensors according to one embodiment of the present invention will hereinafter be described with reference to FIG. 10. Referring to FIG. 10, the IR source 710 may correspond to the emitter 680 of FIG. 9, the depth image processor 720 of FIG. 10 may correspond to the first image sensor 690 of FIG. 9, and as such detailed description of FIGS. 9 and 10 may also be used as necesary. In addition, the camera shown in FIG. 10 may also be designed using the aforementioned structured light scheme.

Referring to FIG. 10, the IR source 710 successively projects a coded pattern image to the user 730. The depth image processor 720 estimates the position of the user using information obtained when the initial pattern image is distorted by the target user 730.

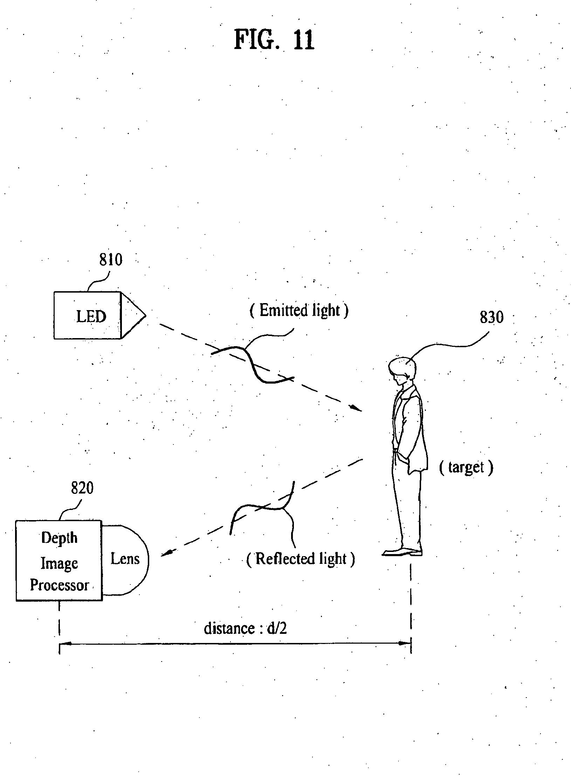

FIG. 11 is a conceptual diagram illustrating another example of a first image sensor among several heterogeneous image sensors according to one embodiment of the present invention. Another example of the first image sensor from among several heterogeneous image sensors according to one embodiment of the present invention will hereinafter be described with reference to FIG. 11. A light emitting diode (LED) shown in FIG. 11 may correspond to the emitter 680 of FIG. 9, the depth image processor 820 shown in FIG. 11 may correspond to the first image sensor 690 of FIG. 9, and as such detailed description of FIGS. 9 and 11 may be supplementarily used. In addition, the camera shown in FIG. 11 may be designed to use the above-mentioned TOF scheme as necessary.

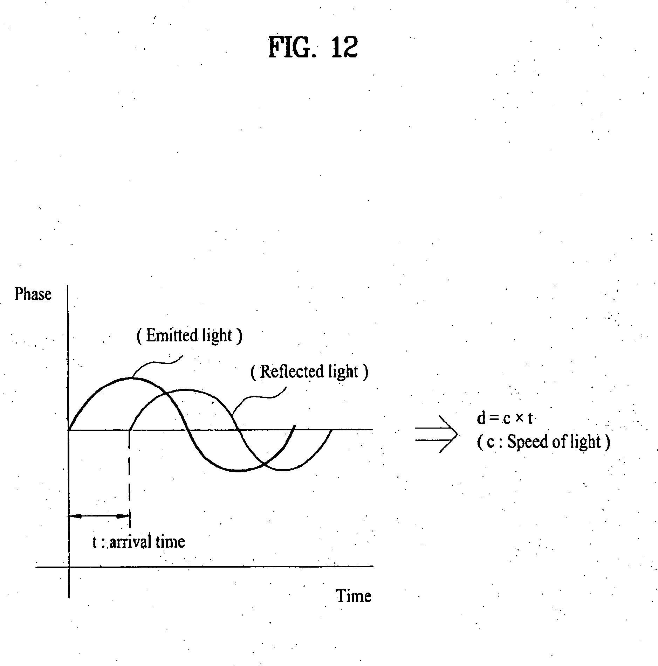

Referring to FIG. 11, the light emitted from the LED 810 is transmitted to the target user 830. The light reflected by the target user 830 is transmitted to the depth image processor 820. The modules shown in FIG. 11 may calculate the position of the target user 830 using time difference information, differently from FIG. 10, and a detailed description thereof will hereinafter be described with reference to FIG. 12.

FIG. 12 is a conceptual diagram illustrating a method for calculating a distance using the first image sensor shown in FIG. 11. A method for calculating a distance using the first image sensor shown in FIG. 11 will hereinafter be described with reference to FIG. 11.

As illustrated in a left graph of FIG. 12, it is possible to recognize an arrival time (t) using a time difference between the emitted light and the reflected light.

In addition, as shown in an equation located at the right side of FIG. 12, a distance from the LED 810 to the target user 830 and a total distance (d) from the target user 830 to the depth image processor 820 is denoted by'd = c x t' (where c = the speed of light and t = arrival time). Therefore, a distance from the target user 830 to either the LED 830 or the depth image processor 820 is estimated as'1/d'.

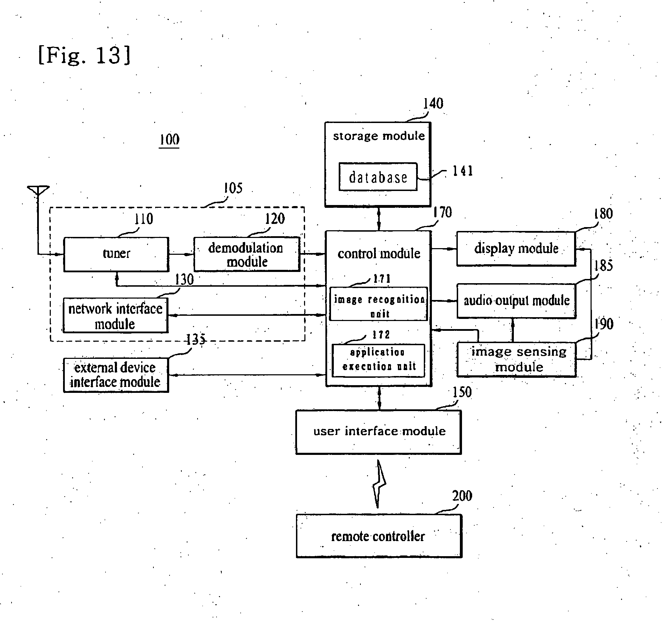

FIG. 13 is a detailed block diagram illustrating an example of the multimedia device shown in FIG. 1 or 2. Referring to FIG. 13, the multimedia device may be connected to a broadcast network or an IP network. For example, the multimedia device 100 may include a connected TV, a smart TV, a Hybrid Broad-Band TV (HBBTV), a set-top box (STB), a DVD player, a Blu-ray player, a game console, a computer, etc.

Referring to FIG. 13, the multimedia device 100 according to one embodiment of the present invention may include a broadcast receiver 105, an external device interface 135, a storage unit 140, a user input interface 150, a controller 170, a display 180, an audio output unit 185, and an image sensing unit 190. The broadcast receiver 105 may include a tuner 110, a demodulator 120 and a network interface 130. Of course, the multimedia device 100 may include the tuner 110 and the demodulator 120 to the exclusion of the network interface 130 as necessary. In contrast, the multimedia device 100 may include the network interface 130 to the exclusion of the tuner 110 and the demodulator 120 as necessary.

The tuner 110 selects an RF broadcast signal, corresponding to either a user-selected channel or all the prestored channels, from among RF broadcast signals received via an antenna. In addition, the selected RF broadcast signal is converted into an intermediate frequency (IF) signal, a baseband image, or an audio signal.

The tuner 110 may receive a single-carrier RF broadcast signal based on an Advanced Television System Committee (ATSC) scheme or a multi-carrier RF broadcast signal based on a Digital Video Broadcasting (DVB) scheme.

The demodulator 120 may perform demodulation and channel decoding on the received signal, thereby obtaining a stream signal TS. The stream signal TS may be a signal in which a video signal, an audio signal and a data signal are multiplexed. For example, the stream signal TS may be an MPEG-2 Transport Stream (TS) in which an MPEG-2 video signal and a Dolby AC-3 audio signal are multiplexed.

The stream signal TS may be input to the controller 170 and thus subjected to demultiplexing and A/V signal processing. The processed video and audio signals are output to the display 180 and the audio output unit 185, respectively.

The external device interface 135 may serve as an interface between an external device and the image display apparatus 100. For interfacing, the external device interface 135 may include an A/V Input/Output (I/O) unit (not shown) and/or a wireless communication module (not shown).

The external device interface 135 may connect the external device to the multimedia device 100.

The external device interface 135 may be connected to the external device such as a Digital Versatile Disc (DVD) player, a Blu-ray player, a game console, an image sensor, a camera, a camcorder, or a computer (e.g., a laptop computer), wirelessly or by wire. Then, the external device interface 135 receives video, audio, and/or data signals from the external device and transmits the received signals to the controller 170. In addition, the external device interface 135 may output video, audio, and data signals processed by the controller 170 to the external device. In order to receive or transmit audio, video and data signals from or to the external device, the external device interface 135 includes the A/V I/O unit (not shown) and/or the wireless communication module (not shown).

The A/V I/O unit of the external device interface 135 may include a Universal Serial Bus (USB) port, a Composite Video Banking Sync (CVBS) port, a Component port, a Super-video (S-video) (analog) port, a Digital Visual Interface (DVI) port, a High Definition Multimedia Interface (HDMI) port, a Red-Green-Blue (RGB) port, and a D-sub port.

The wireless communication module of the external device interface 135 may perform short-range wireless communication with other electronic devices. For short-range wireless communication, the wireless communication module may use Bluetooth, Radio-Frequency IDentification (RFID), Infrared Data Association (IrDA), Ultra WideBand (UWB), ZigBee, and Digital Living Network Alliance (DLNA) protocols.

The external device interface 135 may be connected to various set-top boxes through at least one of the above-described ports and may thus receive data from or transmit data to the various set-top boxes.

The network interface 130 serves as an interface between the multimedia device 100 and a wired/wireless network such as the Internet. The network interface 130 may include an Ethernet port for connection to a wired network. The wireless communication module of the external signal I/O unit 128 may wirelessly access the Internet. For connection to wireless networks, the network interface 130 may use Wireless Local Area Network (WLAN) (i.e., Wi-Fi), Wireless Broadband (WiBro), World Interoperability for Microwave Access (WiMax), and High Speed Downlink Packet Access (HSDPA).

The network interface 130 may transmit data to or receive data from another user or electronic device over a connected network or another network linked to the connected network.

The storage unit 140 may store various programs necessary for the controller 170 to process and control signals, and may also store processed video, audio and data signals.

The storage unit 140 may temporarily store a video, audio and/or data signal received from the external device interface 135 or the network interface 130. The storage unit 140 may store information about broadcast channels according to the channel-add function.

In accordance with one embodiment of the present invention, the storage unit 140 may store data of the user gesture created using a predetermined object, operation data of the multimedia device, or mapping data of the application operation.

The storage unit 140 may store characteristic information of specific objects and images of the objects in the DB 141, and also store the application list that enables the aforementioned objects to be used as input means in the DB 141. The above-described characteristic information may include may include at least one of length, width, shape, thickness, etc. of each object.

The storage unit 140 may include, for example, at least one of a flash memory-type storage medium, a hard disk-type storage medium, a multimedia card micro-type storage medium, a card-type memory (e.g. a Secure Digital (SD) or extreme Digital (XD) memory), a Random Access Memory (RAM), or a Read-Only Memory (ROM) such as an Electrically Erasable and Programmable Read Only Memory. The multimedia device 100 may reproduce content stored in the memory 140 (e.g. video files, still image files, music files, text files, and application files) to the user.

While the storage unit 140 is shown in FIG. 13 as configured separately from the controller 170, to which the present invention is not limited, the storage unit 140 may be incorporated into the controller 170, for example.

The user input interface 150 transmits a signal received from the user to the controller 170 or transmits a signal received from the controller 170 to the user.

For example, the user input interface 150 may receive various user input signals such as a power-on/off signal, a channel selection signal, and a screen setup signal from a remote controller 200 or may transmit a signal received from the controller 170 to the remote controller 200, according to various communication schemes, for example, RF communication and IR communication.

For example, the user input interface 150 may transmit a control signal received from the image sensing unit 190 for sensing a user gesture to the controller 170, or transmit a signal received from the controller 170 to the image sensing unit 190. In this case, the image sensing unit 190 may include a voice sensor, a position sensor, a motion sensor, etc.

The controller 170 may demultiplex the stream signal TS received from the tuner 110, the demodulator 120, or the external device interface 135 into a number of signals and process the demultiplexed signals into audio and video data.

The video signal processed by the controller 170 may be displayed as an image on the display 180. The video signal processed by the controller 170 may also be transmitted to an external output device through the external device interface 135.

The audio signal processed by the controller 170 may be output to the audio output unit 185. Also, the audio signal processed by the controller 170 may be transmitted to the external output device through the external device interface 135.

The display 180 may convert a processed video signal, a processed data signal, and an OSD signal received from the controller 170 or a video signal and a data signal received from the external device interface 135 into RGB signals, thereby generating driving signals.

To sense a user gesture, the multimedia device 100 may further include the sensor unit (not shown) that has at least one of a voice sensor, a position sensor, a motion sensor, and an image sensor, as stated before. A signal sensed by the image sensing unit 150 and a captured image may be output to the controller 170 through the user input interface 150.

The image sensing unit 190 may include a plurality of image sensors that can acquire different kinds of information, and the configuration and operation of the image sensing unit are shown in FIG. 9.

The controller 170 may sense a user position or a user gesture using an image captured by the image sensing unit 190 or a signal sensed by the image sensing unit 190, or by combining the captured image and the sensed signal.

Specifically, in accordance with one embodiment of the present invention, the controller 170 may include an image recognition unit 171, and the image recognition unit 170 may analyze the image captured by the image sensing unit and recognize an object present in the captured image.

The image recognition unit 171 extracts characteristic information of each object from the image captured by the image sensing unit 190, and searches for the DB 141 of the storage unit 140 on the basis of the extracted characteristic information, thereby recognizing the searched object. The above-described characteristic information may include may include at least one of length, width, shape, thickness, etc. of the object.

In addition, the image recognition unit 171 searches the DB 141 on the basis of the image captured by the image sensing unit 190.

In addition, the controller 170 may include an application execution unit 172 according to one embodiment of the present invention. The application execution unit 172 may search for an application corresponding to the object recognized by the image recognition unit 171 and execute the searched application.

In particular, the controller 170 may search for appearance information of the object recognized by the image recognition unit 171, search for an application corresponding to the recognized object, and execute the application. The appearance information may include information of size, length, width, appearance, etc. of the recognized object.

In addition, the controller 170 searches for mapping data of the object recognized by the image recognition unit in the storage unit 140, loads the mapping data, and controls a gesture input standby mode to be set.

In addition, the controller 170 receives a user gesture based on the object through the image sensing unit, receives a multimedia device operation signal or an application operation selection signal for the mapping to the input gesture, and controls the mapping data to be stored in the storage unit 140. The remote controller 200 transmits a user input to the user interface (UI) 150. For transmission of user input, the remote controller 200 may use various communication techniques such as Bluetooth, RF communication, IR communication, Ultra Wideband (UWB), and ZigBee, etc.

In addition, the remote controller 200 may receive a video signal, an audio signal or a data signal from the user interface 150 and output the received signals visually, audibly or as vibrations.

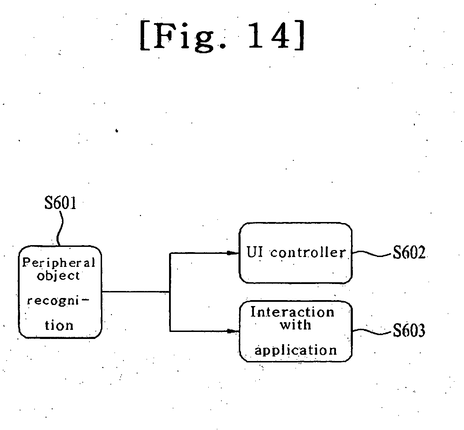

FIG. 14 is a conceptual diagram illustrating a method for recognizing a gesture using an object in a multimedia device according to one embodiment of the present invention.

Referring to FIG. 14, the multimedia device according to one embodiment of the present invention captures a peripheral object using the image sensing unit of FIG. 9, analyzes the captured image, and recognizes the captured object (Step S601).

The image sensing unit can recognize an object using two image sensors that can acquire different kinds of information so as to correctly recognize the object.

The recognized object is established as an input unit, and controls a user interface (UI) of the multimedia device (step S602), and may also be used as an input unit for interaction with an application (step S603).

A method for using the recognized object as an input unit that controls a user interface (UI) of the multimedia device will hereinafter be described with reference to FIG. 10. In addition, a method for using the recognized object as an input unit that uses the application will hereinafter be described with reference to FIG. 11.

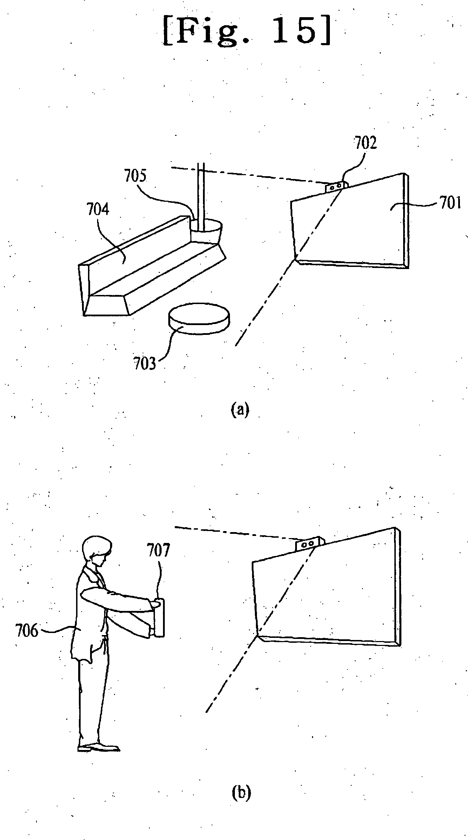

FIG. 15 is a conceptual diagram illustrating a method for controlling a multimedia device to recognize a peripheral object according to one embodiment of the present invention.

Referring to FIG. 15(a), the multimedia device can automatically recognize peripheral objects.

In accordance with one embodiment of the present invention, the multimedia device 701 captures a peripheral environment through the image sensing unit 702, recognizes objects 703, 704 and 705 present in the captured image, and receives a signal for selecting an object to be used as a recognition unit for a user. A menu for receiving the selection signal will hereinafter be described with reference to FIG. 13.

That is, as shown in FIG. 15(a), the image sensing unit 702 of the multimedia device captures images of all objects present in a region recognizable by the image sensing unit, extracts characteristic information of each object contained in the captured images by analyzing the captured images, and searches for the extracted characteristic information in the DB of the multimedia device, thereby recognizing the objects.

In addition, information about an object, that is most appropriate for the manipulation of the multimedia device, from among the recognized objects, may be provided to the user.

Through the above-mentioned operations, although the user does not carry out a direct recognition process, the user may search for recommended items of the multimedia device, and use a peripheral object as an input unit according to the search results.

Referring to FIG. 15(b), the multimedia device may manually recognize a peripheral object.

In accordance with one embodiment of the present invention, the user 706 may control the multimedia device 701 to enter a manual recognition mode and enter an image of an object to be used as an input unit, so that the object can be established as the input unit.

That is, if the multimedia device is set to an object recognition mode, the multimedia device captures an image of the user through the image sensing unit, and extracts an image of the object 707 held by the user 706 from the captured image.

In addition, the multimedia device analyzes the extracted image so as to determine the type of the object using the DB.

During the above-mentioned manual recognition mode, the multimedia device analyzes images of not all regions capable of being captured by the image sensing unit 702, analyzes and recognizes an image of an object held by the user, so that the multimedia device can quickly and correctly recognize only a desired object.

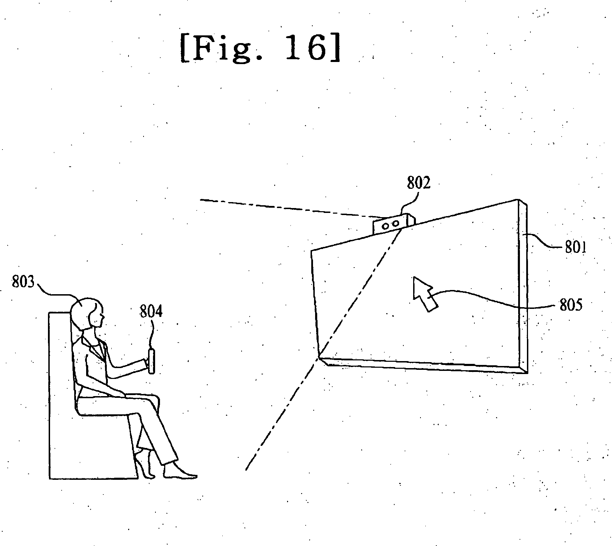

FIG. 16 is a conceptual diagram illustrating a method for manipulating a multimedia device using an object according to one embodiment of the present invention.

Referring to FIG. 16, if a predetermined object 804 is recognized by the multimedia device 801 and is established as an input unit in the multimedia device 801, the user 803 makes a gesture through the image sensing unit 802 by moving the recognized object 804, so that the user 803 can manipulate the multimedia device 801.

For example, if the user 803 moves the recognized object 804 horizontally, the multimedia device captures the motion of the object through the image sensing unit 802, and analyzes the captured image, so that the pointer 805 displayed on the multimedia device can move right or left.

In addition, the multimedia device can perform a variety of operations for controlling the functions of the multimedia device, for example, changing between channels, adjusting volume, etc.

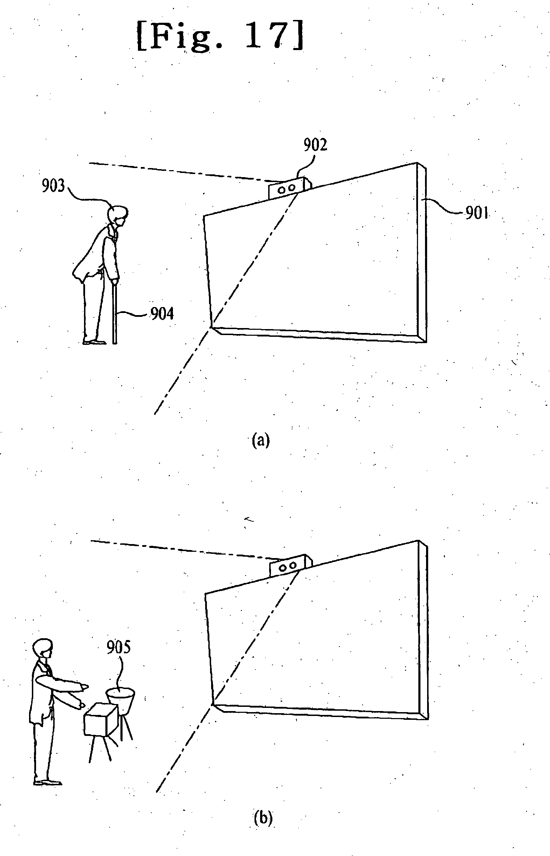

FIG. 17 is a conceptual diagram illustrating a method for utilizing an application of a multimedia device using an object according to one embodiment of the present invention.

In accordance with one embodiment of the present invention, the user allows a variety of peripheral objects to be recognized by the multimedia device, so that the user may use any of the recognized objects as an input unit necessary for interaction with an application.

The application may include applications for various services, for example, a game application, a music application, a movie application, etc.

For example, referring to FIG. 17(a), assuming that the user 903 is executing a golf game application through the multimedia device 901, allows a wooden rod 904 to be recognized as an input unit through the image sensing unit 902 of the multimedia device, the user moves the wooden rod 904 in front of the image sensing unit 902 of the multimedia device, such that he or she can enter a specific operation, such as a golf swing, in a golf game application being executed by the multimedia device 901.

In accordance with another embodiment of the present invention, referring to FIG. 17(b), provided that the user 903 is executing the music game application using the multimedia device 901, a table 905 is recognized as an input unit by the image sensing unit 902 of the multimedia device, a user taps on the table 905 in front of the image sensing unit 902 of the multimedia device such that he or she can enter a drumming action to the music game application being executed by the multimedia device 901.

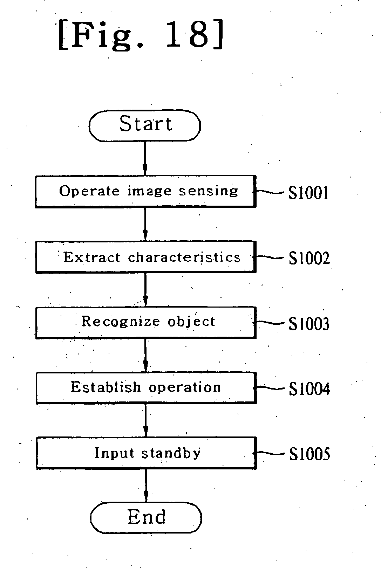

FIG. 18 is a flowchart illustrating a method for operating a multimedia device using an object according to one embodiment of the present invention.

Referring to FIG. 18, the multimedia device captures an image by operating the image sensing unit in step S1001. Image capture may start automatically or be started manually according to a predetermined mode. The image sensing unit may include image sensors capable of acquiring two kinds of information as shown in FIG. 9. For example, the image sensing unit may capture images through a depth image sensor and an RGB image sensor, such that the following operations can be smoothly carried out.

Thereafter, the multimedia device extracts characteristics of the objects contained in the image captured by the image sensing unit (Step S1002).

The multimedia device according to one embodiment of the present invention analyzes the image captured by the image sensing unit, and extracts object characteristics from among objects contained in the captured image.

Through the characteristic extraction algorithm, the multimedia device decides whether a quality of the image captured through the image sensing unit is estimated and used, normalizes the processed image through image processing, and extracts characteristic information,

In addition, the multimedia device may extract distance information, coordinate information, and color information of an image captured by each of the depth image sensor and the RGB image sensor.

After that, the multimedia device recognizes an object contained in the image captured by the image sensing unit on the basis of the extracted characteristics (Step S1003).

In accordance with one embodiment of the present invention, if the above-mentioned characteristic information is extracted, a preset DB stored in the multimedia device is searched for on the basis of the extracted characteristic information. If there is object matching data stored in the DB, the multimedia device determines that the matched object is present in an image captured by the image sensing unit.

Information of size, color, shape, etc. of the object may be used as the above-mentioned matching information.

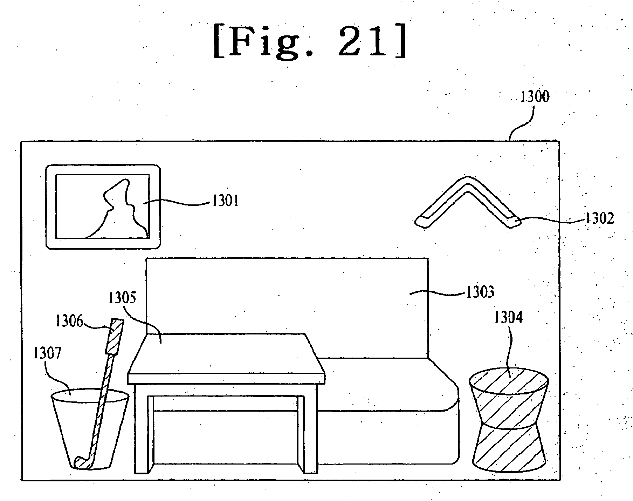

In addition, upon receiving the above-mentioned recognition result, if it is determined that several objects are present in the image captured by the image sensing unit, the multimedia device displays a predetermined menu such that it can receive a signal for selecting an object to be used as an input unit by the user from among several objects, and a detailed description thereof will be described later with reference to FIG. 21.

After that, if the user enters a gesture using the above-mentioned recognized object, the multimedia device configures which operation is to be carried out (Step S1004).

In accordance with one embodiment of the present invention, the above-mentioned setup process may be automatically performed by the multimedia device. Then, the multimedia device displays a predetermined setup menu such that an arbitrary gesture may be assigned to an operation of the multimedia device by the user.

After that, once the above-mentioned setup process is completed, the multimedia device enters an input standby mode (Step S1005).

That is, if the multimedia device loads the above-mentioned setup information in the memory and the image sensing unit of the multimedia device recognizes a user gesture, the multimedia device performs an operation corresponding to the recognized gesture.

Through the above-mentioned operations, the user can use a peripheral object as an input unit for entering a command of the multimedia device, resulting in increased user convenience.

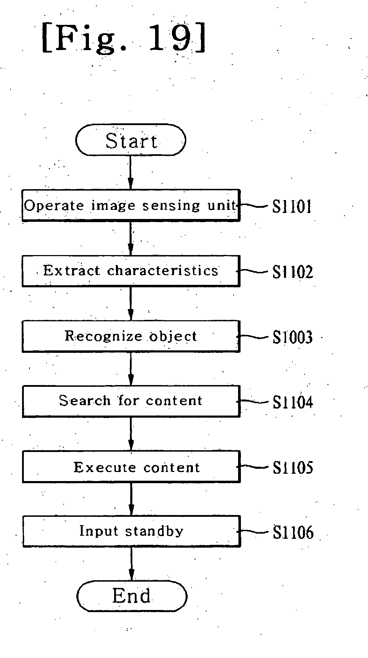

FIG. 19 is a flowchart illustrating a method for utilizing an application of a multimedia device using an object according to one embodiment of the present invention.

In accordance with one embodiment of the present invention, the step S1101 of FIG. 19 is identical to the step S1101 of FIG. 18, the step S1102 of FIG. 19 is identical to the step S1002 of FIG. 18, and the step S1103 of FIG. 19 is identical to the step S1003, and as such detailed description thereof will be omitted herein for convenience of description.

Referring to FIG. 19, if the multimedia device recognizes an object in step S1103, it searches for application content corresponding to the recognized object in step S1104.

The aforementioned application may include a variety of applications, for example, a game application, a music application, a movie application, etc.

In accordance with one embodiment of the present invention, if the object is recognized, the multimedia device extracts characteristic information of the recognized object. As a result, based on the extracted characteristic information, the multimedia device determines whether application content suitable for the recognized object to be used as an input unit is present in a database (DB).

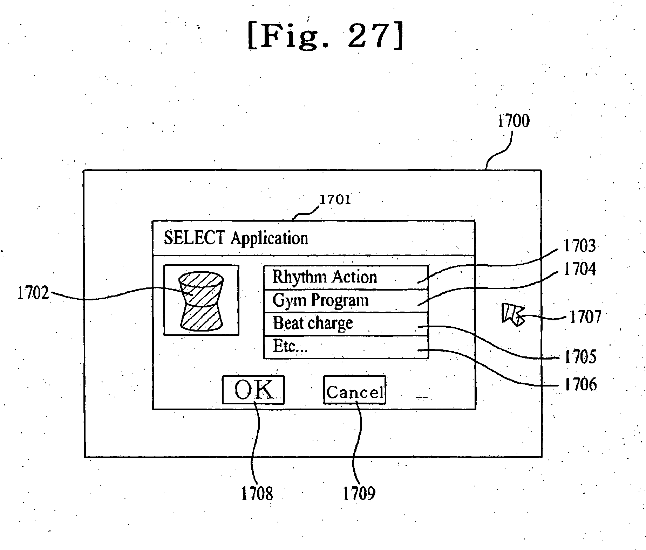

The database (DB) may be stored when a manufactured product is constructed by a manufacturer of the multimedia device, or may be stored while being classified according to individual applications by the user. A detailed description of the database (DB) will be described later with reference to FIG. 27.

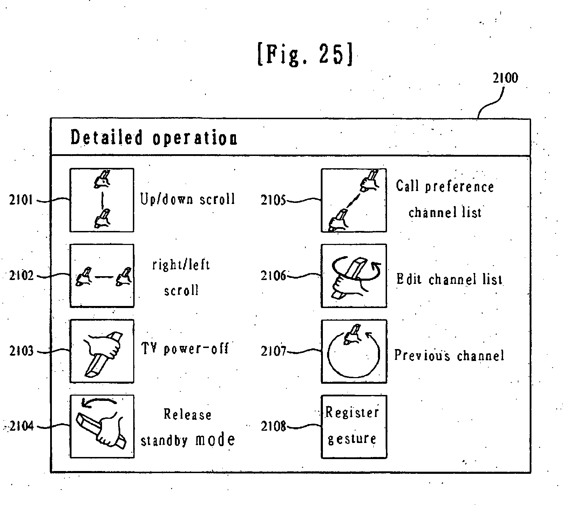

If several applications are searched for during the above search process, the multimedia device displays a predetermined selection menu and thus receives one or more application selection signals. A detailed description thereof will be described later with reference to FIG. 25.

Thereafter, the multimedia device executes the searched application content in step S1105.

In accordance with one embodiment, the multimedia device displays a predetermined message prior to executing the above application, such that it can execute the above application only upon receiving a confirmation signal from the user.

In addition, if there is a possibility of the loss of a task that is being executed by the multimedia device, a message including information about the lost task is displayed so that it can prevent a task from being lost.

Next, the multimedia device enters a gesture input standby mode through the recognized object in step S1106.

That is, provided that the multimedia device executes the above application and a gesture created through the object is entered through the image sensing unit of the multimedia device, the above gesture is reflected in the application usage, so that the user can easily use the above-mentioned application.

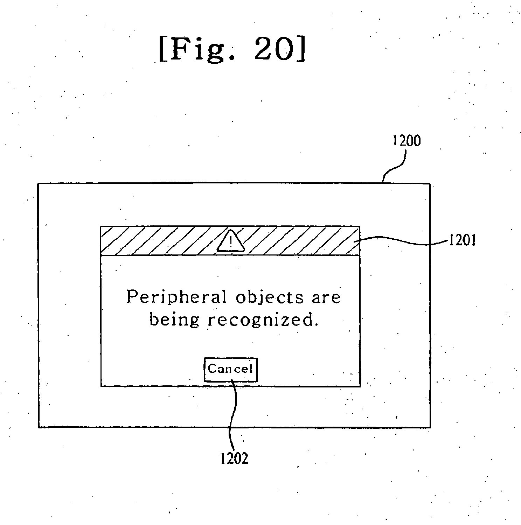

FIG. 20 shows a display image 1200 including an object recognition notification message according to one embodiment of the present invention.

In accordance with one embodiment of the present invention, while the multimedia device senses an object using the image sensing unit of the multimedia device, it can display a notification message 1201.

Under the condition that the multimedia device is in the object recognition mode, if it moves the object to another position, there may occur an unexpected error in the object recognition mode, the multimedia device outputs the notification message 1201 to prevent the error from being generated.

In addition, the notification message 1201 may include a menu cancellation item, and numerically or visually display information about a residual time until the object recognition is completed.

In addition, in order not to disturb a display image of either content or a service currently being used in the multimedia device, the notification message 1201 may be minimized to a specific region of a display image or be displayed with a given transparency.

FIG. 21 shows a display image 1300 for selecting an object to be established as an input unit according to one embodiment of the present invention.

In accordance with one embodiment of the present invention, in the case where the multimedia device recognizes a plurality of objects 1301, 1302, 1303, 1303, 1304, 1305, 1306, and 1307 in the image captured by the image sensing unit of the multimedia device, the multimedia device may display a menu for allowing a user to select an object to be used as an input unit from among the plurality of objects.

Specific objects 1306 and 1304 capable of being properly used as input units of the multimedia device may be displayed as color inversion or bold outline, etc.

In relation to each of the recognized objects, information about an application or service capable of being used as an input unit appropriate for each object may also be additionally displayed.

If the above-mentioned menu screen is displayed, the user may select at least one object from among several objects such that the selected object may be set to an input unit.

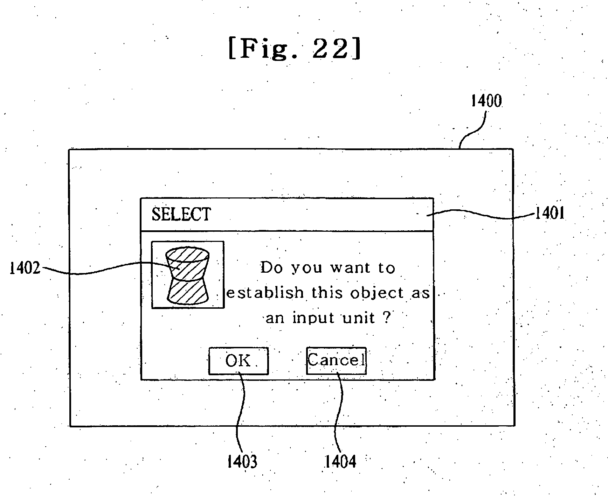

FIG. 22 shows a display image 1400 including an input unit setup menu according to one embodiment of the present invention.

In accordance with one embodiment of the present invention, if one or more objects are selected from among an image captured by the image sensing unit of the multimedia device, and a specific object is selected as an input unit, the multimedia device may display a confirmation message 1401 that allows the user to enter a confirmation message of the object to be used as the input unit.

The object information 1402 may include either information about a single object selected in the captured image acquired from the image sensing unit of the multimedia device or information about a single object selected from among several objects. In addition, the object information 1402 may include an image of a specific part including the single object, a name of the included object, etc.

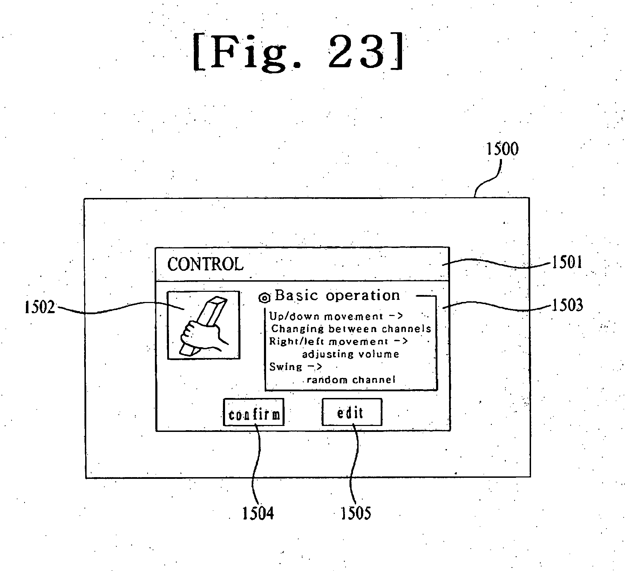

In addition, upon receiving a signal for selecting the confirmation menu item 1403 from the user, a setup menu is displayed on the multimedia device as shown in FIG. 23, a setup process is performed according to the setup information pre-stored in the multimedia device, and the multimedia device enters an input standby mode in which the user can enter a gesture through the object.

In addition, upon receiving a signal for selecting the cancellation menu item 1401 from the user, the multimedia device may return to the menu selection screen image shown in FIG. 21, and re-capture an image of a peripheral environment such that it can re-reform the recognition process.

FIG. 23 shows a display image 1500 including information about a method for manipulating an object to be established as an input unit according to one embodiment of the present invention.

In accordance with one embodiment of the present invention, if selection of an object to be used as an input unit of the multimedia device is completed, a setup menu image 1501 for mapping an operation of the multimedia device to a gesture of the selected object may be displayed.

The setup menu image 150 may include information 1502 about the selected object, pre-established manipulation information 1503, confirmation menu item 1504, and an edit menu item 1505.

The selected object information 1502 may include a cropped image of a part including the selected object, from among an image captured by the image sensing unit of the multimedia device, and may include name information of the selected object.

The pre-established manipulation information 1503 may include the list of multimedia device operations corresponding to a gesture input using the selected object. The multimedia device operation list may be pre-stored in the multimedia device, or characteristic information of the object is extracted after recognition of the object so that the multimedia device operation list may be automatically constructed.

Upon receiving a signal for selecting the confirmation menu item 1504 from the user, the multimedia device loads setup information contained in the pre-established manipulation information 1503 on a memory, so as to perform an operation corresponding to a predetermined gesture entered through the object.

Upon receiving a signal for selecting the edit menu item 1505 from the user, the multimedia device may receive a signal corresponding to a multimedia device operation for each gesture from the user.

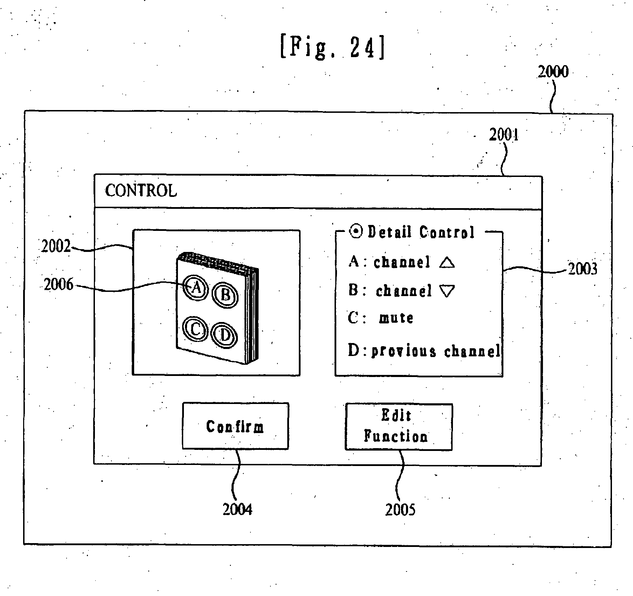

FIG. 24 shows a display image 2000 including detailed manipulation information of an object established as an input unit according to one embodiment of the present invention.

In accordance with one embodiment of the present invention, in relation to an object used as an input unit of the multimedia device, the multimedia device may display a setup menu image 2001 including setup information obtained by mapping a specific operation of the multimedia device to a specific region of the object.

The setup menu image 2001 may include information 2002 of the selected object, detailed manipulation information 2003, a confirmation menu item 2004, and an edit menu item 2005.

The object information 2002 may include a cropped image of a part including the selected object, from among an image captured by the image sensing unit of the multimedia device, and may include name information of the selected object. In addition, the object information 2002 may include information about specific regions 2006 that can be mapped to a specific operation of the multimedia device.

That is, if a specific key value is assigned to a specific region of the object and the multimedia device receives a touch signal directed to the specific region, a specific operation corresponding to the assigned key value can be carried out.

For example, referring to FIG. 24, a key value of a channel-up command is assigned to the region A of the object, a key value of a channel-down command is assigned to the region B, a mute command is assigned to the region C, and a key value about a command for returning to a previous channel is assigned to the region D. If a touch point in the region A is recognized through the image sensor of the multimedia device, a terrestrial broadcast channel being provided from the multimedia device can be increased.

However, for allocation of the above-mentioned key value, in relation to an object capable of allocating a key value to a specific region, the object size may be limited to a predetermined degree or more in such a manner that the image sensor can recognize the specific region.

The detailed manipulation information 2003 may include a list of multimedia device operations corresponding to a key value input generated by the selected object. For example, the multimedia device operation list may be stored in the multimedia device. In another example, characteristic information of the object is extracted after recognition of the object, such that the extracted characteristic information of the object can be automatically constructed.

In addition, upon receiving a signal for selecting the confirmation menu item 2004 from the user, the multimedia device loads setup information contained in the detailed manipulation information 2003 in the memory. If a predetermined key value is entered through the above object, the multimedia device performs an operation corresponding to the predetermined key value.

Upon receiving a signal for selecting the edit menu item 2005 from the user, the multimedia device may receive a signal about which multimedia device operation is mapped to each specific region from the user.

FIG. 25 shows a display image 3000 including the list of user gestures according to one embodiment of the present invention.

In accordance with one embodiment of the present invention, the multimedia device may provide a user with information that maps the user gesture stored in the multimedia device to a specific command, through the list of user gestures.

That is, the multimedia device maps a specific operation executable in the multimedia device to each user gesture and stores the mapping information between the specific operation and the user gesture. If the user gesture is entered through the image sensing unit of the multimedia device, the multimedia device can extract characteristic information of the received user gesture, search for the stored mapping data, and perform the searched specific information.

The list of user gestures may include information about the mapped user gesture as an image, and may include information about the mapped specific command as images or text.

Referring to FIG. 25, if the user makes a gesture like a motion for moving the object up and down, a command 2101 for scrolling a display image up and down can be recognized. If the user makes a gesture like a motion for moving the object right or left, a command 2102 for scrolling a display image in the right or left direction can be recognized. If the user makes a gesture like a motion for moving the object down, a command 2103 for powering off the multimedia device can be recognized. If the user makes a gesture like a motion for rotating the object by 90°, a command 2104 for releasing the multimedia device from a standby mode can be recognized. If the user makes a gesture like a motion for moving the object in a diagonal direction, a command 2105 for calling a preference channel list can be recognized. If the user makes a gesture like a motion for rotating an upper part of the object, a command 2106 for editing a list of channels can be recognized. If the user makes a gesture like a circling motion of the object, a command 2107 for returning to a previous channel can be recognized.

In addition, the list of user gestures may include a menu item 2108 for registering a new user gesture. Therefore, upon receiving a signal for selecting the menu item 2108 from the user, the multimedia device can receive a signal indicating which multimedia device operation is to be mapped to each specific region from the user.

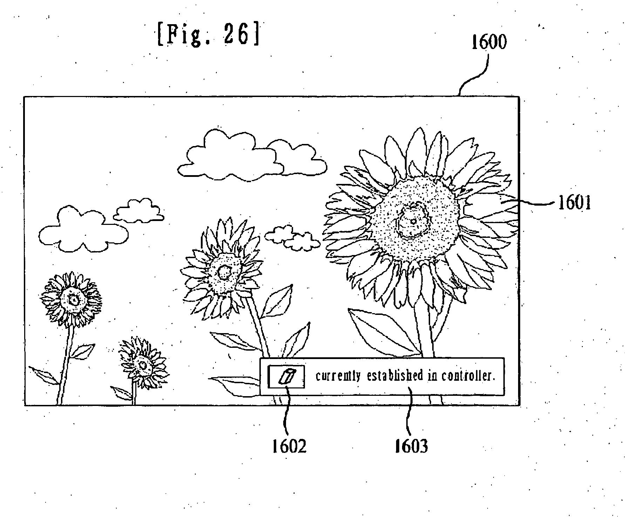

FIG. 26 shows a display image 1600 including an input unit setup notification message according to one embodiment of the present invention.

Referring to FIG. 26, in accordance with one embodiment of the present invention, the multimedia device may display an input unit setup notification message 1603 that includes information 1602 of the object established as an input unit, on a specific region of the display.

That is, if the user is now using predetermined content 1601 through the multimedia device, the above-mentioned input unit setup notification message 1603 may be displayed so as to allow the user to recognize which object was established as an input unit.

In addition, in order not to disturb a display image of either content being displayed on the multimedia device, the input unit notification message 1603 may be displayed with a given transparency.

In addition, the input unit setup notification message 1603 and the information 1602 of the object established as an input unit may be configured in the form of video data or text data.

FIG. 27 shows a display image 1700 including the list of applications corresponding to an object established as an input unit according to one embodiment of the present invention.

Referring to FIG. 27, in accordance with one embodiment of the present invention, if a predetermined object is established as an input unit in the multimedia device, the multimedia device may display the application selection menu 1701 including the list of applications that can properly use the object as an input unit according to characteristic information of the established object.

The application selection menu 1701 may include the list of applications 1703, 1704 and 1705 by which the object can be used as an input unit, other menu item (i.e., 'etc...' menu item) 1706 for calling the list of other application not present in the above application list, information 1702 about the established object, a confirmation menu item 1708 and a cancellation menu item 1709.

The multimedia device analyzes information about the established object, such that it can extract appearance information (e.g., size, shape, etc.) of the object according to the analyzed information. In addition, the multimedia device searches for a database (DB) on the basis of the extracted appearance information, so that it can determine the presence or absence of an application corresponding to the extracted appearance information. In addition, the multimedia device may also display the application lists 1703, 1704 and 1705 according to the searched result.

The user may select one or more application from among the above-mentioned application lists 1703, 1704 and 1705 using the pointer 1707, enters a signal for selecting the confirmation menu item 1708 using the pointer 1707, so that the established object can be used as an input unit of the selected application.

In addition, if a desired application item is not present in the above-mentioned lists 1703, 1704 and 1705), a selection signal of the other menu item 1706 is entered, so that the multimedia device may control displaying of the application lists that are not present in the above lists 1703, 1704 and 1705.

In addition, the user selects the cancellation menu item 1709, so that the process for establishing the input unit of the multimedia device can be terminated.

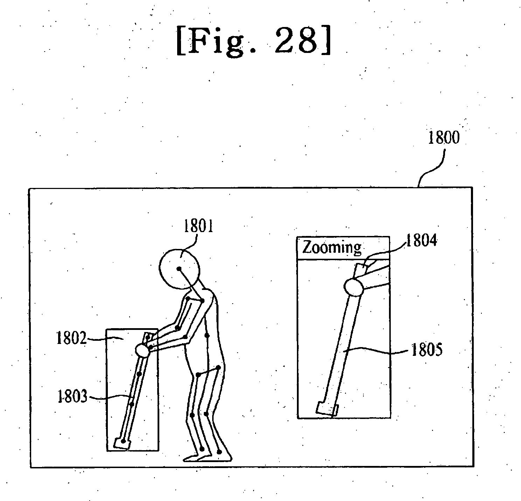

FIG. 28 shows a display image 1800 that uses an application using an object established as an input unit according to one embodiment of the present invention.

Through the selection process shown in FIG. 27, if a predetermined object is selected as an input unit in a predetermined application, the multimedia device can recognize a gesture of the user who handles the object through the display image shown in FIG. 28.

For example, if the application corresponds to the golf game application, the multimedia device may recognize information of the user 1801 and coordinate information of the object 1803 through the image sensing unit, include the recognized information 1801 and 1802, and further include an enlarged image (also called a zoomed-in image) 1804 of the part 1802 at which the object is located.

In other words, in accordance with one embodiment of the present invention, if an image is captured by a depth image sensor (depth camera) contained in the image sensing unit of the multimedia device, distance information of each part of the object is acquired as an image, so that the multimedia device can acquire coordinate information of each part of the user's body and coordinate information of respective parts of each object.

In addition, the multimedia device tracks the movement of the coordinate information captured by the image sensing unit so as to recognize the user gesture.

In addition, the depth image sensor is vulnerable not only to image capturing at a remote site but also to high-resolution image capturing, so that the multimedia device displays coordinates of the distance information obtained by the depth image sensor and enlarges (i.e., zooms in) an image of the part 1802 in which the object is present, as denoted by a reference numeral 1804.

Since the enlarged image 1804 is displayed as an object of the corresponding application, an image of the golf club 1805 is displayed, so that the user can easily recognize the displayed object.

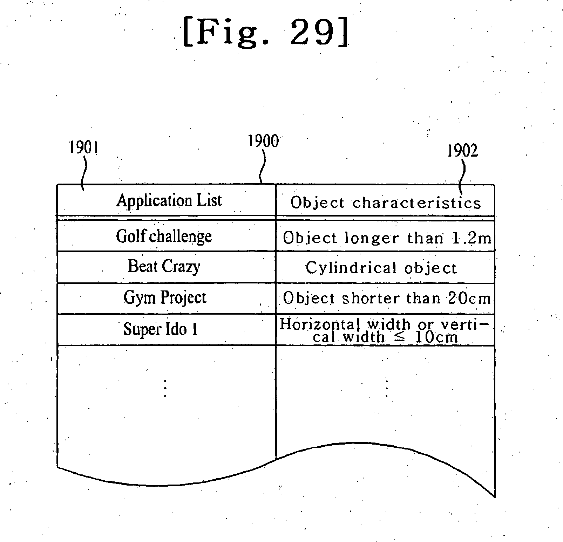

FIG. 29 is a database (DB) 1900 for storing data of an object corresponding to an application according to one embodiment of the present invention.

In accordance with one embodiment of the present invention, the multimedia device may store appearance information of appropriate objects, each of which can be used as an input unit, while being classified according to individual applications, in a predetermined DB.

In other words, the DB 1900 includes the application list 1901 installed in the multimedia device. Considering manipulation characteristics of each application contained in the application list 1901, the DB 1900 may store appearance information 1902 of respective objects capable of being used as input units of the above-mentioned applications.

The appearance information 1902 may include a size range of the object, a length range, a shape range, etc.

The DB 1900 may be stored when a manufactured product is constructed by a manufacturer of the multimedia device. If necessary, the user may enter and store desired data to the DB 1900. In addition, since a new application is installed in the multimedia device, the DB can be updated.

In other words, if a signal for selecting an object to be used as an input is input to the multimedia device, the multimedia device analyzes characteristics of the object, and searches for the DB 1900 according to the analyzed result, thereby extracting the appropriate application list.

The multimedia device and the method for operating the same according to the foregoing exemplary embodiments are not restricted to the configuration and the method of the exemplary embodiments set forth herein. Therefore, variations and combinations of all or some of the exemplary embodiments set forth herein may fall within the scope of the present invention.

The method for operating the multimedia device according to the foregoing exemplary embodiments may be implemented as code that can be written on a computer-readable recording medium and thus read by a processor. The computer-readable recording medium may be any type of recording device in which data is stored in a computer-readable manner. Examples of the computer-readable recording medium include a ROM, a RAM, a CD-ROM, a magnetic tape, a floppy disc, an optical data storage, and a carrier wave (e.g., data transmission over the Internet). The computer-readable recording medium can be distributed over a plurality of computer systems connected to a network so that computer-readable code is written thereto and executed therefrom in a decentralized manner.

While the present invention has been particularly shown and described with reference to exemplary embodiments thereof, it will be understood by those of ordinary skill in the art that various changes in form and details may be made therein without departing from the spirit and scope of the present invention as defined by the following claims.

As apparent from the above description, the exemplary embodiments of the present invention have the following effects.

One embodiment of the present invention can use a variety of objects present in a peripheral region as input units for entering a predetermined command to a multimedia device, resulting in increased user convenience.

Another embodiment of the present invention provides an application that uses an object as an input unit according to a shape of the object, making the application more interesting and enjoyable to a user.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A gesture recognition method for use in a multimedia device (200, 400, 500), the method comprising:
capturing a peripheral image of the multimedia device by operating an image sensing unit (190, 702, 802, 902);
recognizing an object contained in the captured peripheral image;
receiving a user gesture based on the recognized object from the image sensing unit (190, 702, 802, 902);
mapping a multimedia device operation to the gesture; and
establishing a standby mode of the multimedia device for receiving a gesture input made by a user interacting with the recognized object;
wherein the recognizing of the object includes;
extracting characteristic information of a plurality of objects from the captured image;
searching for the extracted characteristic information of each of the plurality of objects in a database (DB) of the multimedia device (200, 400, 500); and
**characterized in that**:
the capturing of the peripheral image includes, if a predetermined object is selected as an input unit in a predetermined application:
recognizing information of the user (1801); and
acquiring coordinate information of the object (1803) contained in the peripheral image through a depth image sensor of the image sensing unit (190, 702, 802, 902); and
acquiring an image of a specific part (1802) at which the object (1803) is located through an RGB image sensor of the image sensing unit (190, 702,802,902) according to the acquired coordinate information; and
displaying:
the recognized information of the user (1801) and the acquired coordinate information of a distance to the object (1803) and the part (1802) of the image containing the object (1803)
and enlarging the part (1802) of the image in which the object (1803) is located, including displaying an image of the recognized input object (1805) of the predetermined application.

2. The gesture recognition method according to claim 1, wherein the method further comprises providing information to the user about an object (1803) that has appearance information corresponding to stored appearance information in the database (DB) for objects that can be used as an input unit of the predetermined application of the multimedia device (200, 400, 500).

3. The gesture recognition method according to claim 1 or 2, where the database (DB) is stored by a manufacturer of the multimedia device (200, 400, 500).

4. The gesture recognition method according to daim 1, wherein the mapping between the multimedia device operation and the gesture includes:
receiving a gesture made by a user using the recognized object through the image sensing unit (190, 702, 802, 902);
receiving a selection signal of a multimedia device operation to be mapped to the received gesture; and
storing mapping data in response to the selection signal.

5. The gesture recognition method according to claim 1, wherein searching for the extracted characteristic information of the object includes searching for a list of objects corresponding to the extracted characteristic information.

6. The gesture recognition method according to claim 5 In combination with claim 4, wherein the multimedia device operation is an operation of the predetermined application.

7. A multimedia device (200, 400, 500) configured for recognizing a user gesture, the multimedia device comprising:
a display (180) configured for displaying an image;
an image sensing unit (190, 702, 802, 902) configured for capturing a peripheral image of the multimedia device;
image recognition unit (171) configured for analyzing the image captured by the image sensing unit (190, 702, 802, 902) and for recognizing an object contained in the captured peripheral image;
a storage unit (140) configured for storing mapping data between a user gesture made by the object and a multimedia device operation and for storing characteristic information of the object; and
a controller (170) that is configured to search for the mapping data of the object recognized by the image recognition unit (171) in the storage unit (140), to
load the mapping data, and to thus establish a standby mode for receiving a gesture input using the recognized object;
**characterized in that**:
the image sensing unit (190, 702, 802, 902) comprises a depth image sensor configured for acquiring information about a distance from an image sensor to a target object as an image and an RGB image sensor configured for acquiring color information as an image; and
if a predetermined object is selected as an input unit in a predetermined application, the multimedia device (200, 400, 500) is further configured to:
recognize information of the user (1801); and
acquire coordinate information of the object (1803) contained in the peripheral image through the depth image sensor of the image sensing unit (190, 702, 802, 902); and
acquire an image of a specific part (1802) at which the object (1803) is located through the RGB image sensor of the image sensing unit (190, 702, 802, 902) according to the acquired coordinate information; and
display:
the recognized information of the user (1801) and the acquired coordinate information of a distance to the object (1803) and the part (1802) of the image containing the object (1803); and
and enlarge the part (1802) of the image in which the object (1803) is located, including displaying an image of the recognized input object (1805) of the predetermined application.

8. The multimedia device according to claim 7, wherein the multimedia device is configured to provide information to the user about an object (1803) that has appearance information corresponding to stored appearance information in the database (DB) for objects that can used as an input unit of the predetermined application.

9. The multimedia device according to claim 7 or 8, wherein the controller (170) is configured to:
receive a gesture of a user who handles the object through the image sensing unit (171),
receive a selection signal of a multimedia device operation mapped to the received gesture, and
store mapping data in the storage unit (140).

10. The multimedia device according to claim 9, wherein the multimedia device operation is an operation of the predetermined application, and the standby mode is for receiving a gesture made by a user related to the predetermined application operation using the recognized object.

## Patentansprüche

1. Gestenerkennungsverfahren zur Verwendung in einer Multimediavorrichtung (200, 400, 500), wobei das Verfahren umfasst:
Erfassen eines Peripheriebilds der Multimediavorrichtung durch Betreiben einer Bildsensoreinheit (190, 702, 802, 902);
Erkennen eines Objekts, das in dem erfassten Peripheriebild enthalten ist;
basierend auf dem erkannten Objekt, Empfangen einer Benutzergeste von der Bildsensoreinheit (190, 702, 802, 902);
Abbilden einer Multimediavorrichtungsoperation auf die Geste; Herstellen eines Standby-Modus der Multimediavorrichtung zum Empfangen einer Gesteneingabe, die durch einen mit dem erkannten Objekt interagierenden Benutzer vorgenommen wird;
wobei das Erkennen des Objekts umfasst:
Extrahieren charakteristischer Daten einer Vielzahl von Objekten aus dem erfassten Bild;
Suchen nach den extrahierten charakteristischen Daten eines jeden der Vielzahl von Objekten in einer Datenbank (DB) der Multimediavorrichtung (200, 400, 500); und
**dadurch gekennzeichnet, dass**:
das Erfassen des Peripheriebilds, wenn ein vorbestimmtes Objekt als eine Eingabeeinheit in einer vorbestimmten Anwendung ausgewählt wird, umfasst:
Erkennen von Daten des Benutzers (1801); und
Erlangen von Koordinatendaten des Objekts (1803), das in dem Peripheriebild enthalten ist, durch einen Tiefenbildsensor der Bildsensoreinheit (190, 702, 802, 902); und
Erlangen eines Bilds eines bestimmten Teils (1802), an dem sich das Objekt (1803) befindet, durch einen RGB-Bildsensor der Bildsensoreinheit (190, 702, 802, 902) gemäß den erlangten Koordinatendaten; und
Anzeigen:
der erkannten Daten des Benutzers (1801) und der erlangten Koordinatendaten einer Entfernung zu dem Objekt (1803) und des Teils (1802) des Bilds, der das Objekt (1803) enthält,
und Vergrößern des Teils (1802) des Bilds, in dem sich das Objekt (1803) befindet, einschließlich Anzeigen eines Bilds des erkannten Eingabeobjekts (1805) der vorbestimmten Anwendung.

2. Gestenerkennungsverfahren nach Anspruch 1, bei dem das Verfahren ferner umfasst ein Bereitstellen von Daten an den Benutzer über ein Objekt (1803), das Erscheinungsdaten aufweist, die gespeicherten Erscheinungsdaten in der Datenbank (DB) für Objekte entsprechen, die als eine Eingabeeinheit der vorbestimmten Anwendung der Multimediavorrichtung (200, 400, 500) verwendet werden können.

3. Gestenerkennungsverfahren nach Anspruch 1 oder 2, bei dem die Datenbank (DB) von einem Hersteller der Multimediavorrichtung (200, 400, 500) gespeichert wird.

4. Gestenerkennungsverfahren nach Anspruch 1, bei dem das Abbilden zwischen der Multimediavorrichtungsoperation und der Geste umfasst:
Empfangen einer Geste, die von einem Benutzer, der das erkannte Objekt verwendet, vorgenommen wird, durch die Bildsensoreinheit (190, 702, 802, 902);
Empfangen eines Auswahlsignals einer Multimediavorrichtungsoperation, die auf die empfangene Geste abzubilden ist; und
Speichern von Abbildungsdaten in Reaktion auf das Auswahlsignal.

5. Gestenerkennungsverfahren nach Anspruch 1, bei dem das Suchen nach den extrahierten charakteristischen Daten des Objekts ein Suchen nach einer Liste von Objekten umfasst, die den extrahierten charakteristischen Daten entsprechen.

6. Gestenerkennungsverfahren nach Anspruch 5 in Kombination mit Anspruch 4, bei dem die Multimediavorrichtungsoperation eine Operation der vorbestimmten Anwendung ist.

7. Multimediavorrichtung (200, 400, 500), die zum Erkennen einer Benutzergeste eingerichtet ist, wobei die Multimediavorrichtung umfasst:
ein Display (180), das zum Anzeigen eines Bilds eingerichtet ist;
eine Bildsensoreinheit (190, 702, 802, 902), die zum Erfassen eines Peripheriebilds der Multimediavorrichtung eingerichtet ist;
eine Bilderkennungseinheit (171), die zum Analysieren des durch die Bildsensoreinheit (190, 702, 802, 902) erfassten Bilds eingerichtet ist und zum Erkennen eines Objekts, das in dem erfassten Peripheriebild enthalten ist;
eine Speichereinheit (140), die zum Speichern von Abbildungsdaten zwischen einer durch das Objekt vorgenommenen Benutzergeste und einer Multimediavorrichtungsoperation eingerichtet ist und zum Speichern von charakteristischen Daten des Objekts; und
eine Steuereinheit (170), die dazu eingerichtet ist, nach den Abbildungsdaten des durch die Bilderfassungseinheit (171) erkannten Objekts in der Speichereinheit (140) zu suchen, um die Abbildungsdaten zu laden und somit einen Standby-Modus zum Empfangen einer Gesteneingabe unter Verwendung des erkannten Objekts herzustellen,
**dadurch gekennzeichnet, dass**:
die Bildsensoreinheit (190, 702, 802, 902) einen Tiefenbildsensor umfasst, der zum Erlangen von Daten hinsichtlich einer Entfernung von einem Bildsensor zu einem Zielobjekt als ein Bild eingerichtet ist, und einen RGB-Bildsensor, der zum Erlangen von Farbdaten als ein Bild eingerichtet; und
wobei, wenn ein vorbestimmtes Objekt als eine Eingabeeinheit in einer vorbestimmten Anwendung ausgewählt ist, die Multimediavorrichtung (200, 400, 500) ferner dazu eingerichtet ist:
Daten des Benutzers (1801) zu erkennen; und
Koordinatendaten des Objekts (1803), das in dem Peripheriebild enthalten ist, durch den Tiefenbildsensor der Bildsensoreinheit (190, 702, 802, 902) zu erlangen; und
ein Bild eines bestimmten Teils (1802), an dem sich das Objekt (1803) befindet, durch den RGB-Bildsensor der Bildsensoreinheit (190, 702, 802, 902) gemäß der erlangten Koordinatendaten zu erlangen; und
anzuzeigen:
die erkannten Daten des Benutzers (1801) und die erlangten Koordinatendaten einer Entfernung zu dem Objekt (1803) und den Teil (1802) des Bilds, der das Objekt (1803) enthält;
und den Teil (1802) des Bilds, in dem sich das Objekt (1803) befindet, zu vergrößern, einschließlich Anzeigen eines Bilds des erkannten Eingabeobjekts (1805) der vorbestimmten Anwendung.

8. Multimediavorrichtung nach Anspruch 7, bei der die Multimediavorrichtung dazu eingerichtet ist, dem Benutzer Daten über ein Objekt (1803) bereitzustellen, das Erscheinungsdaten aufweist, die gespeicherten Erscheinungsdaten in der Datenbank (DB) für Objekte entsprechen, die als eine Eingabeeinheit der vorbestimmten Anwendung verwendet werden können.

9. Multimediavorrichtung nach Anspruch 7 oder 8, bei der die Steuereinheit (170) dazu eingerichtet ist:
eine Geste eines Benutzers, der das Objekt handhabt, durch die Bildsensoreinheit (171) zu empfangen,
ein Auswahlsignal einer Multimediavorrichtungsoperation, die auf die empfangene Geste abgebildet ist, zu empfangen, und
Abbildungsdaten in der Speichereinheit (140) zu speichern.

10. Multimediavorrichtung nach Anspruch 9, bei der die Multimediavorrichtungsoperation eine Operation der vorbestimmten Anwendung ist, und der Standby-Modus zum Empfangen einer Geste vorhanden ist, die von einem Benutzer in Bezug auf die vorbestimmte Anwendungsoperation unter Verwendung des erkannten Objekts vorgenommen wird.

## Revendications

1. Procédé de reconnaissance de gestes destiné à une utilisation dans un dispositif multimédia (200, 400, 500), le procédé comprenant :
la capture d'une image périphérique du dispositif multimédia en utilisant une unité (190, 702, 802, 902) de détection d'image ;
la reconnaissance d'un objet contenu dans l'image périphérique capturée ;
la réception d'un geste d'utilisateur sur la base de l'objet reconnu à partir de l'unité (190, 702, 802, 902) de détection d'image ;
le mappage d'une opération de dispositif multimédia sur le geste ; et
l'établissement d'un mode d'attente du dispositif multimédia pour recevoir une entrée de geste fait par un utilisateur interagissant avec l'objet reconnu ;
dans lequel la reconnaissance de l'objet inclut :
l'extraction d'informations de caractéristiques d'une pluralité d'objets à partir de l'image capturée ;
la recherche des informations de caractéristiques extraites de chacun de la pluralité d'objets dans une base de données (DB) du dispositif multimédia (200, 400, 500) ; et
**caractérisé en ce que** :
la capture de l'image périphérique inclut, si un objet prédéterminé est sélectionné comme une unité d'entrée dans une application prédéterminée :
la reconnaissance d'informations de l'utilisateur (1801) ; et
l'acquisition d'informations de coordonnées de l'objet (1803) contenu dans l'image périphérique par l'intermédiaire d'un capteur d'image de profondeur de l'unité (190, 702, 802, 902) de détection d'image ; et
l'acquisition d'une image d'une partie spécifique (1802) au niveau de laquelle l'objet (1803) est localisé par l'intermédiaire d'un capteur d'image RVB de l'unité (190, 702, 802, 902) de détection d'image en fonction des informations de coordonnées acquises ; et
l'affichage :
des informations reconnues de l'utilisateur (1801) et des informations de coordonnées acquises d'une distance à l'objet (1803) et à la partie (1802) de l'image contenant l'objet (1803) ;
et l'agrandissement de la partie (1802) de l'image dans laquelle l'objet (1803) est localisé, incluant l'affichage d'une image de l'objet d'entrée reconnu (1805) de l'application prédéterminée.

2. Procédé de reconnaissance de gestes selon la revendication 1, dans lequel le procédé comprend en outre la fourniture d'informations à l'utilisateur à propos d'un objet (1803) qui a une information d'aspect correspondant à une information d'aspect stockée dans la base de données (DB) pour des objets qui peuvent être utilisés comme une unité d'entrée de l'application prédéterminée du dispositif multimédia (200, 400, 500).

3. Procédé de reconnaissance de gestes selon la revendication 1 ou 2, où la base de données (DB) est stockée par un fabricant du dispositif multimédia (200, 400, 500).

4. Procédé de reconnaissance de gestes selon la revendication 1, dans lequel le mappage entre l'opération de dispositif multimédia et le geste inclut :
la réception d'un geste fait par un utilisateur en utilisant l'objet reconnu par l'intermédiaire de l'unité (190, 702, 802, 902) de détection d'image ;
la réception d'un signal de sélection d'une opération de dispositif multimédia destiné à être mappé sur le geste reçu ; et
le stockage de données de mappage en réponse au signal de sélection.

5. Procédé de reconnaissance de gestes selon la revendication 1, dans lequel la recherche des informations de caractéristiques extraites de l'objet inclut la recherche d'une liste d'objets correspondant aux informations de caractéristiques extraites.

6. Procédé de reconnaissance de gestes selon la revendication 5 en combinaison avec la revendication 4, dans lequel l'opération de dispositif multimédia est une opération de l'application prédéterminée.

7. Dispositif multimédia (200, 400, 500) configuré pour reconnaître un geste d'utilisateur, le dispositif multimédia comprenant :
un afficheur (180) configuré pour afficher une image ;
une unité (190, 702, 802, 902) de détection d'image configurée pour capturer une image périphérique du dispositif multimédia ;
une unité (171) de reconnaissance d'image configurée pour analyser l'image capturée par l'unité (190, 702, 802, 902) de détection d'image et pour reconnaître un objet contenu dans l'image périphérique capturée ;
une unité (140) de stockage configurée pour stocker des données de mappage entre un geste d'utilisateur fait par l'objet et une opération de dispositif multimédia et pour stocker des informations de caractéristiques de l'objet ; et
un contrôleur (170) qui est configuré pour rechercher les données de mappage de l'objet reconnu par l'unité (171) de reconnaissance d'image dans l'unité (140) de stockage, pour charger les données de mappage, et pour ainsi établir un mode d'attente pour recevoir une entrée de geste en utilisant l'objet reconnu ;
**caractérisé en ce que** :
l'unité (190, 702, 802, 902) de détection d'image comprend un capteur d'image de profondeur configuré pour acquérir des informations à propos d'une distance d'un capteur d'image à un objet cible comme une image et un capteur d'image RVB configuré pour acquérir des informations de couleur comme une image ; et
si un objet prédéterminé est sélectionné comme une unité d'entrée dans une application prédéterminée, le dispositif multimédia (200, 400, 500) est en outre configuré pour :
reconnaître des informations de l'utilisateur (1801) ; et
acquérir des informations de coordonnées de l'objet (1803) contenu dans l'image périphérique par l'intermédiaire du capteur d'image de profondeur de l'unité (190, 702, 802, 902) de détection d'image ; et
acquérir une image d'une partie spécifique (1802) au niveau de laquelle l'objet (1803) est localisé par l'intermédiaire du capteur d'image RVB de l'unité (190, 702, 802, 902) de détection d'image en fonction des informations de coordonnées acquises ; et
afficher :
les informations reconnues de l'utilisateur (1801) et les informations de coordonnées acquises d'une distance à l'objet (1803) et à la partie (1802) de l'image contenant l'objet (1803) ;
et agrandir la partie (1802) de l'image dans laquelle l'objet (1803) est localisé, incluant l'affichage d'une image de l'objet d'entrée reconnu (1805) de l'application prédéterminée.

8. Dispositif multimédia selon la revendication 7, dans lequel le dispositif multimédia est configuré pour fournir des informations à l'utilisateur à propos d'un objet (1803) qui a une information d'aspect correspondant à une information d'aspect stockée dans la base de données (DB) pour des objets qui peuvent être utilisés comme une unité d'entrée de l'application prédéterminée.

9. Dispositif multimédia selon la revendication 7 ou 8, dans lequel le contrôleur (170) est configuré pour :
recevoir un geste d'un utilisateur qui manipule l'objet par l'intermédiaire de l'unité (171) de détection d'image,
recevoir un signal de sélection d'une opération de dispositif multimédia mappé sur le geste reçu, et
stocker des données de mappage dans l'unité (140) de stockage.

10. Dispositif multimédia selon la revendication 9, dans lequel l'opération de dispositif multimédia est une opération de l'application prédéterminée, et le mode d'attente sert à recevoir un geste fait par l'utilisateur se rapportant à l'opération d'application prédéterminée en utilisant l'objet reconnu.
